# EUROPÄISCHE PATENTSCHRIFT

(11) **EP 3 957 802 B1**
(45) Veröffentlichungstag und Bekanntmachung des Hinweises auf die Patenterteilung: **10.09.2025**
(21) Anmeldenummer: 21191187.0
(22) Anmeldetag: 13.08.2021
(51) Int. Cl.: E03F 5/04, F16K 31/122

(54) **VENTIL FÜR BODENABLAUF**
VALVE FOR FLOOR DRAIN
SOUPAPE POUR ÉGOUT

(30) Priorität: 19.08.2020 DE 102020121732
(43) Veröffentlichungstag der Anmeldung: 23.02.2022
(73) Patentinhaber: Scherzer Umwelttechnik GmbH, 45307 Essen (DE)
(72) Erfinder: PRAMSCHÜFER, Alexander, 45133 Essen (DE)
(74) Vertreter: Bals & Vogel Patentanwälte PartGmbB

(56) Entgegenhaltungen:
- AU-B2- 585 720
- DE-B- 1 142 938
- DE-U1- 202004 014 899
- US-A- 2 293 269
- US-A- 5 569 372

## Beschreibung

Die Erfindung betrifft eine Ablaufsicherungsvorrichtung für mindestens einen Ablauf, insbesondere einen Bodeneinlauf, einen Hofablauf oder Straßenablauf, nach einem unabhängigen Vorrichtungsanspruch und ein entsprechendes Ablaufsicherungssystem mit mehreren Ablaufsicherungsvorrichtungen nach dem unabhängigen Systemanspruch.

Ablaufsicherungsvorrichtungen sind grundsätzlich bekannt. Die Ablaufsicherungsvorrichtungen werden überall dort eingesetzt, wo mit wassergefährdenden Stoffen umgegangen wird oder es zum ungewollten Ausdringen von Abwasser aus der Kanalisation kommen kann. Die Ablaufsicherungsvorrichtungen dienen dabei zur Rückhaltung oder für ein reguliertes Steuern von Ablaufströmen. Die bekannten Ablaufsicherungsvorrichtungen werden zumeist manuell betätigt. Dabei ist es jedoch nachteilig, dass eine Bedienperson zu nahe an die Ablaufströme kommen muss und damit in Berührung kommen kann. Zudem ist es bei den bekannten Ablaufsicherungsvorrichtungen nachteilig, dass die Ablaufsicherungsvorrichtungen einzeln und nacheinander betätigt werden müssen. Ferner ist es nachteilig, dass zum Betätigen von solchen Ablaufsicherungsvorrichtungen Muskelkraft aufgewandt werden muss.

Eine Druckschrift US 2 293 269 A ist bekannt, die eine Ventilbetätigungsvorrichtung für einen Milchcontainer offenbart. Eine weitere Druckschrift AU 585 720 B2 ist bekannt, die einen Sammelbehälter zur Aufnahme von Regenwasser und Waschwasser und einen Regenwasserauslass aus dem Sammelbehälter zum Anschluss an ein Regenwasserkanalisationssystem offenbart.

Aufgabe der vorliegenden Erfindung liegt somit darin, eine verbesserte Ablaufsicherungsvorrichtung bereitzustellen, bei der zumindest einer von den oben genannten Nachteilen mindestens zum Teil überwunden werden kann. Insbesondere ist es Aufgabe der vorliegenden Erfindung, eine verbesserte Ablaufsicherungsvorrichtung bereitzustellen, die sich zum Einsatz in Industrie- und Gewerbegebieten sowie in privaten und öffentlichen Gebäuden und Einrichtungen als Schutzvorrichtung vor dem ungewollten Eindringen von Gefahrenstoffen in die Kanalisation oder Ausdringen von Abwasser aus der Kanalisation eignet. Weiterhin ist es Aufgabe der vorliegenden Erfindung, eine verbesserte Ablaufsicherungsvorrichtung bereitzustellen, die Bedienpersonen vor einem Kontakt mit Gefahrenstoffen und/oder Abwasser zuverlässig schützt. Zudem ist es Aufgabe der vorliegenden Erfindung, eine verbesserte Ablaufsicherungsvorrichtung bereitzustellen, die sich einfach, bequem und leicht bedienen lässt. Darüber hinaus ist Aufgabe der vorliegenden Erfindung, ein verbessertes Ablaufsicherungssystem mit mehreren Ablaufsicherungsvorrichtungen bereitzustellen.

Die erfindungsgemäße Aufgabe wird gelöst durch eine Ablaufsicherungsvorrichtung für mindestens einen Ablauf, insbesondere einen Bodeneinlauf, einen Hofablauf oder Straßenablauf, mit den Merkmalen des unabhängigen Vorrichtungsanspruches, insbesondere aus dem kennzeichnenden Teil des Vorrichtungsanspruches, und durch ein entsprechendes Ablaufsicherungssystem mit mehreren Ablaufsicherungsvorrichtungen mit den Merkmalen des unabhängigen Systemanspruches. Dabei gelten Merkmale und Details, die im Zusammenhang mit der Ablaufsicherungsvorrichtung beschrieben sind, selbstverständlich auch im Zusammenhang mit dem Ablaufsicherungssystem und jeweils umgekehrt, sodass bezüglich der Offenbarung zu den einzelnen Erfindungsaspekten, umfassend die Ablaufsicherungsvorrichtung und das Ablaufsicherungssystem, stets wechselseitig Bezug genommen wird bzw. werden kann.

Die vorliegende Erfindung sieht gemäß dem ersten Aspekt vor: eine Ablaufsicherungsvorrichtung für mindestens einen Ablauf, insbesondere einen Bodeneinlauf, einen Hofablauf oder Straßenablauf, aufweisend eine Verschlussbaugruppe zum Verschließen und zum Öffnen (gemeint ist abwechselndes Verschließen oder Öffnen) des Ablaufes und eine Betätigungsbaugruppe zum Betätigen, insbesondere zum Ansteuern, der Verschlussbaugruppe, wobei die Verschlussbaugruppe eine Dichtscheibe für den Ablauf aufweist, und wobei die Dichtscheibe zwischen zwei Positionen bewegbar ist: einer Schließposition, in welcher der Ablauf durch die Dichtscheibe verschlossen ist, und einer Freigabeposition, in welcher der Ablauf durch die Dichtscheibe geöffnet ist. Hierzu ist es erfindungsgemäß vorgesehen, dass die Betätigungsbaugruppe als eine automatische und/oder automatisierte Steuerungsvorrichtung, vorzugsweise mit einer Fernsteuerungsvorrichtung bzw. Bedienvorrichtung und/oder Schaltvorrichtung, ausgeführt ist, um die Verschlussbaugruppe auf Abstand zur Verschlussbaugruppe, insbesondere ohne einen direkten Kontakt von Bedienelementen, wie z. B. Schwenkschlüssel, die durch einen Bedienperson greifbar sind, mit der Verschlussbaugruppe, zu betätigen, insbesondere anzusteuern und somit die Dichtscheibe zwischen der Schließposition und der Freigabeposition zu überführen.

Unter automatisch ist gemeint, dass die Betätigungsbaugruppe im Wesentlichen ohne Aufwenden einer Muskelkraft betätigt werden kann, bspw. per Knopfdruck und/oder Schalterbetätigung. Unter automatisiert ist gemeint, dass die Betätigungsbaugruppe maschinell, d. h. ohne ein manuelles Mitwirken von Bedienpersonal betätigt, insbesondere angesteuert, werden kann, um die Dichtscheibe zwischen der Schließposition und der Freigabeposition zu überführen.

Unter einer Dichtscheibe im Rahmen der Erfindung kann eine massive Platte, bspw. aus Edelstahl, verstanden werden, die beim Anliegen an einer Dichtung in einem Ablaufgehäuse eine Ablauföffnung dichtend abschließen kann. Grundsätzlich ist es im Rahmen der Erfindung auch denkbar, dass die Dichtscheibe am äußeren Umfang eine umlaufende Dichtung aufweisen kann, die gegen eine Innenfläche des Ablaufgehäuses zur Auflage kommen kann, um die Ablauföffnung dichtend abzuschließen.

Der Erfindungsgedanke liegt dabei darin, eine automatische und/oder automatisierte Ablaufsicherungsvorrichtung bereitzustellen, die als Schutzvorrichtung vor dem ungewollten Eindringen von Gefahrenstoffen in die Kanalisation und zum Verhindern des Ausdringens von Abwasser aus der Kanalisation dient. Die erfindungsgemäße Ablaufsicherungsvorrichtung kann ohne großen Aufwand nachträglich in bestehende Bodeneinläufe, Hof- und Straßenabläufe eingebaut werden. Die automatische und/oder automatisierte Ablaufsicherungsvorrichtung im Sinne der Erfindung kann vorzugsweise pneumatisch oder hydraulisch ausgeführt sein und vorzugsweise über eine Fernsteuerungsvorrichtung (die ebenfalls als eine Bedienvorrichtung und/oder Schaltvorrichtung bezeichnet werden kann), bspw. in Form eines Schaltkastens, z. B. per Knopfdruck und/oder Schalterbetätigung, zum Verschließen und zum Öffnen des Ablaufes angesteuert werden. Vorteilhafterweise ist es mithilfe der erfindungsgemäßen Ablaufsicherungsvorrichtung möglich, mehrere Ablaufsicherungsvorrichtungen hintereinander über ein und denselben Schaltkasten zu betätigen. Die Verschlussbaugruppe kann bspw. einen senkrecht zum Boden betätigbaren Hubzylinder aufweisen. Durch den Einsatz eines senkrecht bewegbaren Hubzylinders können Abläufe auch bei hohen Druckverhältnissen von oben oder unten sicher und gefahrlos für Bedienpersonen aus sicherer Entfernung geschlossen oder geöffnet werden. Darüber hinaus kann eine Rückmeldung über die aktuelle Position der Dichtscheibe (Schließposition (I) oder der Freigabeposition (II)) bzw. den aktuellen Betriebszustand der Ablaufsicherungsvorrichtung ("Geschlossen" oder "Offen") über geeignete Sensoren an die Bedienperson erfolgen.

Die automatische und/oder automatisierte Ablaufsicherungsvorrichtung dient vorteilhafterweise zum sicheren Einsatz in Industrie- und Gewerbegebieten sowie in privaten und öffentlichen Gebäuden und Einrichtungen als eine verbesserte, zuverlässige Schutzvorrichtung vor dem ungewollten Eindringen von Gefahrenstoffen in die Kanalisation oder Ausdringen von Abwasser aus der Kanalisation. Die automatische und/oder automatisierte Ablaufsicherungsvorrichtung schützt die Bedienpersonen zuverlässig vor einem Kontakt mit Gefahrenstoffen und/oder Abwasser. Die automatische und/oder automatisierte Ablaufsicherungsvorrichtung lässt sich einfach, bequem und leicht bedienen. Die automatische und/oder automatisierte Ablaufsicherungsvorrichtung kann vorteilhafterweise völlig automatisiert bzw. maschinell betätigt werden, sogar ohne Bedienpersonal, bspw. nach einem Schaltplan. Die automatische und/oder automatisierte Ablaufsicherungsvorrichtung kann zudem auf eine vorteilhafte Weise im Rahmen eines verbesserten Ablaufsicherungssystems mit mehreren Ablaufsicherungsvorrichtungen eingesetzt werden, die wiederum simultan oder einzeln betätigt werden können. Insbesondere kann die erfindungsgemäße Ablaufsicherungsvorrichtung auf eine vorteilhafte Weise in den Anlagen zum Lagern, Abfüllen, Herstellen und Behandeln von wassergefährdenden Stoffen, in explosionsgefährdeten Bereichen, sowie in Bereichen nach Lösch- und Reinigungsarbeiten verwendet werden.

Ferner kann die Erfindung bei einer Ablaufsicherungsvorrichtung vorsehen, dass die Betätigungsbaugruppe als eine hydraulische oder pneumatische Steuerungsvorrichtung ausgeführt ist. Durch solche Ausführung der Betätigungsbaugruppe kann eine pneumatische oder hydraulische Hilfsenergie zum Betätigen der Verschlussbaugruppe genutzt werden, um die Dichtscheibe aus der Ferne zu betätigen. Durch eine solche Betätigungsbaugruppe kann die benötigte Kraft an der Fernsteuerungsvorrichtung bzw. Bedienvorrichtung und/oder Schaltvorrichtung reduziert werden, sodass ein Knopfdruck genügt, um die Dichtscheibe in die Freigabeposition anzuheben oder in die Schließposition abzusenken.

Erfindungsgemäß weist die Verschlussbaugruppe einen Hubzylinder auf, welcher mit der Dichtscheibe verbunden ist, und welcher zum Bewegen der Dichtscheibe ausgeführt ist.

Weiterhin kann die Erfindung bei einer Ablaufsicherungsvorrichtung vorsehen, dass der Hubzylinder mit der Dichtscheibe stoffschlüssig befestigt, insbesondere verschweißt ist. Mithilfe vom Hubzylinder kann ein geschlossener Innenraum für ein Druckfluid geschaffen werden. In dem Innenraum können vorzugsweise zwei Steuerkammern gebildet werden. Wird eine erste Steuerkammer mit einem Fluid befüllt, so bewegt sich der Hubzylinder in eine Richtung, bspw. in die Richtung der Schließposition der Dichtscheibe. Wird eine zweite Steuerkammer mit einem Druckfluid befüllt, so bewegt sich der Hubzylinder in eine andere Richtung, bspw. in die Richtung der Freigabeposition der Dichtscheibe. Beim Bewegen nimmt der Hubzylinder die Dichtscheibe mit. Auf diese Weise kann die Dichtscheibe zwischen der Schließposition und der Freigabeposition überführt werden.

Des Weiteren kann die Erfindung bei einer Ablaufsicherungsvorrichtung vorsehen, dass der Hubzylinder becherförmig mit einem Boden und einer Mantelfläche ausgeführt ist, und/oder dass die Dichtscheibe kragenförmig an einer Öffnung des Hubzylinders angeordnet ist. Auf diese Weise kann der Hubzylinder und die Dichtscheibe einfach und kostengünstig ausgeführt werden, um eine vertikale Bewegung der Dichtscheibe zu bewirken.

Zudem kann die Erfindung bei einer Ablaufsicherungsvorrichtung vorsehen, dass der Hubzylinder einen, insbesondere hülsenförmigen und/oder stufigen, Zylinderkopf aufweist, um einen Innenraum im Hubzylinder zu begrenzen, insbesondere dichtend abzuschließen, und/oder um eine Führungsfläche für die Dichtscheibe beim Gleiten an dem Steuerkolben zwischen der Schließposition und der Freigabeposition bereitzustellen, wobei insbesondere der Zylinderkopf mit dem Hubzylinder verbunden, bspw. form- und/oder kraftschlüssig befestigt, insbesondere verschraubt, ist. Hierzu kann der Zylinderkopf eine Außenverzahnung aufweisen, die mit einer Innenverzahnung nahe der Öffnung am Hubzylinder verschraubt werden kann. In dem Innenraum können weiterhin zwei Steuerkammern gebildet werden, die abwechselnd mit einem Druckfluid befüllt werden können, um zu bewirken, dass der Hubzylinder entweder nach unten in die Schließposition der Dichtscheibe oder nach oben in die Freigabeposition der Dichtscheibe verfahren kann.

Außerdem kann die Erfindung bei einer Ablaufsicherungsvorrichtung vorsehen, dass zwischen dem Zylinderkopf und dem Steuerkolben sowie koaxial zu dem Steuerkolben mindestens eines der folgenden Elemente angeordnet ist:
- ein Abstreifring, insbesondere aus einem Dichtungsmaterial, bspw. Elastomer, zum Abdichten der Steuerkammer zwischen dem Steuerkolben und dem Hubzylinder nach außen und/oder zum Abstreifen von Witterungsrückständen und/oder Schmutzrückständen vom Steuerkolben, insbesondere beim Überführen der Dichtscheibe aus der Schließposition in die Freigabeposition,
- ein Führungsband, insbesondere aus einem Polymer, bspw. umfassend Fluor und/oder Kohlenstoff, zum Reduzieren der Reibung beim Gleiten der Dichtscheibe an dem Steuerkolben zwischen der Schließposition und der Freigabeposition, und/oder
- ein Lippenring, insbesondere aus einem Dichtungsmaterial, bspw. Elastomer, zum Abdichten der Steuerkammer zwischen dem Steuerkolben und dem Hubzylinder nach außen, insbesondere beim Überführen der Dichtscheibe aus der Freigabeposition in die Schließposition.

Auf diese Weise kann eine erweiterte Funktionalität am Zylinderkopf bereitgestellt werden.

Zudem ist es denkbar, dass der Lippenring mithilfe einer Deckelscheibe am Zylinderkopf gehalten ist, wobei vorzugsweise die Deckelscheibe mit dem Zylinderkopf verbunden, bspw. form- und/oder kraftschlüssig befestigt, insbesondere verschraubt, ist. Mithilfe einer Deckelscheibe kann somit auf eine einfache Weise ein verbesserter Zylinderkopf mit einer erweiterten Funktionalität bereitgestellt werden.

Ferner kann die Erfindung bei einer Ablaufsicherungsvorrichtung vorsehen, dass die Dichtscheibe und/oder der Hubzylinder aus einem Metall oder einer Metalllegierung, insbesondere Edelstahl, ausgebildet sind/ist. Auf diese Weise können/kann die Dichtscheibe und/oder der Hubzylinder witterungsbeständig, säurebeständig und temperaturbeständig in einem großen Temperaturbereich ausgeführt sein.

Darüber hinaus ist es denkbar, dass die Dichtscheibe und/oder der Hubzylinder aus einem Metall oder einer Metalllegierung, insbesondere Leichtmetall, ausgebildet sind/ist und eine Beschichtung aus Edelstahl aufweisen/aufweist. Auf diese Weise kann das Gewicht der Dichtscheibe und/oder des Hubzylinders reduziert werden und die verbesserten Eigenschaften an der Oberfläche der Elemente im Hinblick auf die Witterungsbeständigkeit, Säurebeständigkeit und Temperaturbeständigkeit beibehalten werden.

Erfindungsgemäß weist die Betätigungsbaugruppe einen Steuerkolben auf, welcher dazu ausgeführt ist, eine Lauffläche für die Dichtscheibe beim Bewegen zwischen der Schließposition und der Freigabeposition bereitzustellen.

Weiterhin kann die Erfindung bei einer Ablaufsicherungsvorrichtung vorsehen, dass der Steuerkolben dazu ausgeführt ist, eine insbesondere hydraulische oder pneumatische Hilfsenergie zum Betätigen der Verschlussbaugruppe bereitzustellen. Durch den Steuerkolben kann die Bewegung der Dichtscheibe stabil erfolgen. Auch kann der Steuerkolben zum Befüllen der Steuerkammern mit dem Druckfluid dienen. Hierzu kann der Steuerkolben entsprechende Steuerleitungen in Form von Kanälen aufweisen, die durch den Steuerkolben verlaufen und in die entsprechende Steuerkammern münden.

Erfindungsgemäß weist die Betätigungsbaugruppe einen Steuerkolbenhalter auf, welcher dazu ausgeführt ist, den Steuerkolben zu halten.

Des Weiteren kann die Erfindung bei einer Ablaufsicherungsvorrichtung vorsehen, dass der Steuerkolbenhalter dazu ausgeführt ist, eine insbesondere hydraulische oder pneumatische Hilfsenergie zum Betätigen der Verschlussbaugruppe bereitzustellen. Mithilfe des Steuerkolbenhalters kann eine einfache Befestigungsmöglichkeit für den Steuerkolben geschaffen werden und außerdem eine günstige Position zum Platzieren von Steuerventilen geschaffen werden.

Zudem kann die Erfindung bei einer Ablaufsicherungsvorrichtung vorsehen, dass der Steuerkolbenhalter mit dem Steuerkolben verbunden, bspw. form- und/oder kraftschlüssig befestigt, insbesondere verschraubt, ist. Auf diese Weise kann eine einfache Befestigung für den Steuerkolben bereitgestellt werden.

Außerdem kann die Erfindung bei einer Ablaufsicherungsvorrichtung vorsehen, dass der Steuerkolben und der Hubzylinder derart zueinander angeordnet sind, dass zwischen dem Steuerkolben und dem Hubzylinder mindestens eine, insbesondere zwei, fluiddicht nach außen abgedichtete Steuerkammer ausgebildet sind, und/oder dass der Steuerkolben und der Hubzylinder derart zueinander angeordnet sind, dass zwischen dem Steuerkolben und dem Hubzylinder eine erste Steuerkammer zum Überführen der Dichtscheibe aus der Freigabeposition in die Schließposition und eine zweite Steuerkammer zum Überführen der Dichtscheibe aus der Schließposition in die Freigabeposition ausgebildet sind. Auf diese Weise kann eine einfache, robuste und zuverlässig wirkende Betätigungsbaugruppe geschaffen werden.

Ferner kann die Erfindung bei einer Ablaufsicherungsvorrichtung vorsehen, dass der Steuerkolben eine Kolbendichtung, insbesondere aus einem Kautschuk, bspw. Nitrilkautschuk, zum Abdichten der ersten Steuerkammer von der zweiten Steuerkammer zwischen dem Steuerkolben und dem Hubzylinder aufweist, wobei insbesondere die Kolbendichtung mithilfe einer Unterlegscheibe am Steuerkolben gehalten ist, wobei vorzugsweise die Unterlegscheibe mithilfe einer Schraubmutter am Steuerkolben befestigt, insbesondere verschraubt, ist. Auf diese Weise können zwei fluiddicht voreinander abgegrenzte Steuerkammern bereitgestellt werden.

Erfindungsgemäß ist vorgesehen, dass der Steuerkolbenhalter und der Steuerkolben eine erste Steuerleitung zum Überführen der Dichtscheibe aus der Freigabeposition in die Schließposition und eine zweite Steuerleitung zum Überführen der Dichtscheibe aus der Schließposition in die Freigabeposition aufweisen.

Weiterhin kann die Erfindung bei einer Ablaufsicherungsvorrichtung vorsehen, dass die Steuerleitungen zum Betätigen der Verschlussbaugruppe innen durch den Steuerkolbenhalter und den Steuerkolben verlaufen.

Die Steuerleitungen können dazu dienen, ein Druckfluid in die eine oder in die andere Steuerkammer zuzuführen.

Des Weiteren kann die Erfindung bei einer Ablaufsicherungsvorrichtung vorsehen, dass die erste Steuerleitung zum Überführen der Dichtscheibe aus der Freigabeposition in die Schließposition fluidisch an die erste Steuerkammer angeschlossen ist und die zweite Steuerleitung zum Überführen der Dichtscheibe aus der Schließposition in die Freigabeposition fluidisch an die zweite Steuerkammer angeschlossen ist. Somit kann entweder die eine oder die andere Steuerkammer einfach und ohne einen großen Konstruktionsaufwand mit dem Druckfluid befüllt werden.

Zudem kann die Erfindung bei einer Ablaufsicherungsvorrichtung vorsehen, dass der Steuerkolbenhalter mindestens ein, insbesondere zwei, Steuerventile zum Betätigen der Verschlussbaugruppe aufweist, und/oder dass der Steuerkolbenhalter ein erstes Ventil zum Ansteuern der Dichtscheibe aus der Freigabeposition in die Schließposition und ein zweites Ventil zum Ansteuern der Dichtscheibe aus der Schließposition in die Freigabeposition aufweist. Mithilfe der Steuerventile kann einfach und bequem eine Befüllung der Steuerkammern realisiert werden.

Außerdem kann die Erfindung bei einer Ablaufsicherungsvorrichtung vorsehen, dass das erste Ventil zum Überführen der Dichtscheibe aus der Freigabeposition in die Schließposition an die erste Steuerleitung angeschlossen ist und das zweite Ventil zum Überführen der Dichtscheibe aus der Schließposition in die Freigabeposition fluidisch an die zweite Steuerleitung angeschlossen ist. Somit können die Steuerventile ein Druckfluid entweder in die eine Steuerleitung oder in die andere Steuerleitung reinlassen.

Ferner kann die Erfindung bei einer Ablaufsicherungsvorrichtung vorsehen, dass der Steuerkolbenhalter und/oder der Steuerkolben aus einem Metall oder einer Metalllegierung, insbesondere Edelstahl, ausgebildet sind/ist. Auf diese Weise können/kann der Steuerkolbenhalter und/oder der Steuerkolben witterungsbeständig, säurebeständig und temperaturbeständig in einem großen Temperaturbereich ausgeführt sein.

Ebenso ist es denkbar, dass der Steuerkolbenhalter und/oder der Steuerkolben aus einem Metall oder einer Metalllegierung, insbesondere Leichtmetall, ausgebildet sind/ist und eine Beschichtung aus Edelstahl aufweisen/aufweist. Auf diese Weise kann das Gewicht des Steuerkolbenhalters und/oder des Steuerkolbens reduziert werden und die verbesserten Eigenschaften an der Oberfläche der Elemente im Hinblick auf die Witterungsbeständigkeit, Säurebeständigkeit und Temperaturbeständigkeit beibehalten werden.

Weiterhin kann die Erfindung bei einer Ablaufsicherungsvorrichtung vorsehen, dass der Steuerkolbenhalter, vorzugsweise über mindestens eine, insbesondere zwei, außenliegende Fernleitungen, mit einer Fernsteuerungsvorrichtung verbunden ist, die auf Abstand zur Verschlussbaugruppe anordbar ist. Auf diese Weise kann realisiert werden, dass Fernsteuerungsvorrichtung auf einem beliebigen Abstand zur Ablaufsicherungsvorrichtung angeordnet werden kann.

Des Weiteren kann die Erfindung bei einer Ablaufsicherungsvorrichtung vorsehen, dass die Fernsteuerungsvorrichtung zum Ansteuern der Dichtscheibe aus der Freigabeposition in die Schließposition dazu ausgeführt ist, ein Druckfluid durch das erste Ventil am Steuerkolbenhalter zu befördern und das zweite Ventil am Steuerkolbenhalter zu öffnen, während die Dichtscheibe aus der Freigabeposition in die Schließposition verfährt, und das erste Ventil am Steuerkolbenhalter zu schließen und das zweite Ventil am Steuerkolbenhalter offen zu halten, nach dem Dichtscheibe die Schließposition erreicht hat. Auf diese Weise kann die Dichtscheibe zuverlässig aus der Freigabeposition in die Schließposition überführt werden.

Zudem kann die Erfindung bei einer Ablaufsicherungsvorrichtung vorsehen, dass die Fernsteuerungsvorrichtung zum Ansteuern der Dichtscheibe aus der Schließposition in die Freigabeposition dazu ausgeführt ist, ein Druckfluid durch das zweite Ventil am Steuerkolbenhalter zu befördern und das erste Ventil am Steuerkolbenhalter zu öffnen, während die Dichtscheibe aus der Schließposition in die Freigabeposition verfährt, und das zweite Ventil am Steuerkolbenhalter zu schließen und das erste Ventil am Steuerkolbenhalter offen zu halten, nach dem Dichtscheibe die Freigabeposition erreicht hat. Auf diese Weise kann die Dichtscheibe zuverlässig aus der Schließposition in die Freigabeposition überführt werden.

Außerdem kann die Erfindung bei einer Ablaufsicherungsvorrichtung vorsehen, dass die Fernsteuerungsvorrichtung mindestens ein Schaltelement, insbesondere ein Schalthebel, oder zwei Schaltelemente, insbesondere zwei Schaltknöpfe aufweist, um die Verschlussbaugruppe zu betätigen. Somit kann einfache und bequeme Bedienung der Fernsteuerungsvorrichtung bereitgestellt werden.

Ferner ist es denkbar, dass mindestens ein Sensor für die Schließposition und/oder die Freigabeposition der Dichtscheibe vorgesehen ist. Auf diese Weise kann ein Feedback über die richtige Funktionsweise der Ablaufsicherungsvorrichtung erhalten werden.

Weiterhin kann die Erfindung bei einer Ablaufsicherungsvorrichtung vorsehen, dass ein Ablaufgehäuse zum Abstützen der Betätigungsbaugruppe am Ablauf und/oder zum Bestimmen einer Ablauföffnung am Ablauf, die durch die Dichtscheibe verschließbar ist, vorgesehen ist, wobei insbesondere das Ablaufgehäuse dazu ausgeführt ist, form- und/oder kraftschlüssig und/oder stoffschlüssig am Ablauf befestigt zu werden. Mithilfe des Ablaufgehäuses kann die Ablaufsicherungsvorrichtung einfach und ohne großen Aufwand nachträglich in bestehende Bodeneinläufe, Hof- und Straßenabläufe eingebaut werden.

Die vorliegende Erfindung sieht gemäß dem ersten Aspekt vor: ein Ablaufsicherungssystem mit mehreren Ablaufsicherungsvorrichtungen, die wie oben beschrieben ausgeführt sein können. Mithilfe des erfindungsgemäßen Ablaufsicherungssystems können die gleichen Vorteile erreicht werden, die oben im Zusammenhang mit der erfindungsgemäßen Ablaufsicherungsvorrichtung beschrieben wurden. Auf diese Vorteile wird vorliegend vollumfänglich Bezug genommen. Vorteilhafterweise kann mithilfe des erfindungsgemäßen Ablaufsicherungssystems eine automatische und/oder automatisierte Betätigung, insbesondere Steuerung, von mehreren Ablaufsicherungsvorrichtungen, auch in einer weit verteilten Anlage, ermöglicht werden.

Des Weiteren kann die Erfindung bei einem Ablaufsicherungssystem vorsehen, dass die mehreren Ablaufsicherungsvorrichtungen mithilfe einer Fernsteuerungsvorrichtung alle zusammen und/oder simultan betätigbar sind, die auf Abstand zu den mehreren Ablaufsicherungsvorrichtungen anordbar ist, wobei insbesondere die mehreren Ablaufsicherungsvorrichtungen seriell verschaltet sind, oder die mehreren Ablaufsicherungsvorrichtungen mithilfe einer Fernsteuerungsvorrichtung einzeln und/oder zu beliebigen Zeiten betätigbar sind, die auf Abstand zu den mehreren Ablaufsicherungsvorrichtungen anordbar ist. Auf diese Weise kann nach Kundenwunsch eine flexible und bequeme Betätigung, insbesondere Steuerung, von mehreren Ablaufsicherungsvorrichtungen, auch in einer weit verteilten Anlage, ermöglicht werden.

Zudem kann die Erfindung bei einem Ablaufsicherungssystem vorsehen, dass die Fernsteuerungsvorrichtung mindestens ein Schaltelement oder zwei Schaltelemente für alle Ablaufsicherungsvorrichtung aufweist, um die Ablaufsicherungsvorrichtungen zusammen und/oder simultan zu betätigen, oder dass die Fernsteuerungsvorrichtung mindestens ein Schaltelement oder zwei Schaltelemente pro Ablaufsicherungsvorrichtung aufweist, um die Ablaufsicherungsvorrichtungen einzeln und/oder zu beliebigen Zeiten zu betätigen. Auch dabei kann eine flexible und bequeme Betätigung, insbesondere Steuerung, von mehreren Ablaufsicherungsvorrichtungen, auch in einer weit verteilten Anlage, ermöglicht werden.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Es zeigen:
- Figur 1: eine schematische Darstellung einer Ablaufsicherungsvorrichtung im Sinne der Erfindung in einer Explosionsdarstellung,
- Figur 2: eine schematische Darstellung einer Ablaufsicherungsvorrichtung im Sinne der Erfindung in einer Explosionsdarstellung und im Schnitt entlang einer Längsachse der Ablaufsicherungsvorrichtung parallel zur Bewegungsrichtung eines Hubzylinders,
- Figur 3: eine schematische Darstellung einer Dichtscheibe im Sinne der Erfindung im Schnitt senkrecht zur Dichtscheibe und in einer Draufsicht auf die Dichtscheibe,
- Figur 4: eine schematische Darstellung eines Hubzylinders im Sinne der Erfindung im Schnitt entlang einer Längsachse des Hubzylinders und in einer Draufsicht auf eine Öffnung des Hubzylinders,
- Figur 5: eine schematische Darstellung eines Zylinderkopfes im Sinne der Erfindung im Schnitt entlang einer Längsachse des Zylinderkopfes,
- Figur 6: eine schematische Darstellung eines Steuerkolbens im Sinne der Erfindung im Schnitt entlang einer Längsachse des Steuerkolbens und in einer Draufsicht auf den Steuerkolben,
- Figur 7: eine schematische Schnittdarstellung einer Ablaufsicherungsvorrichtung im Sinne der Erfindung in einer Freigabeposition einer Dichtscheibe,
- Figur 8: eine schematische Schnittdarstellung einer Ablaufsicherungsvorrichtung im Sinne der Erfindung in einer Schließposition einer Dichtscheibe, und
- Figur 9: eine schematische Darstellung eines Ablaufsicherungssystems im Sinne der Erfindung.

In den nachfolgenden Figuren werden für die gleichen technischen Merkmale auch von unterschiedlichen Ausführungsbeispielen die identischen Bezugszeichen verwendet. In der Regel werden die Bezugszeichen von den gleichen Ausführungsbeispielen nur einmal beschrieben.

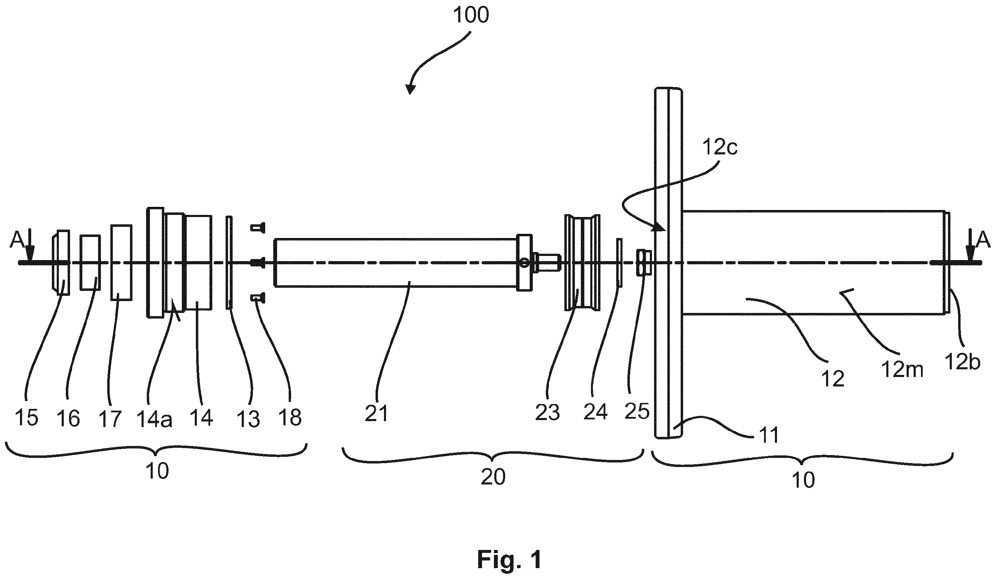

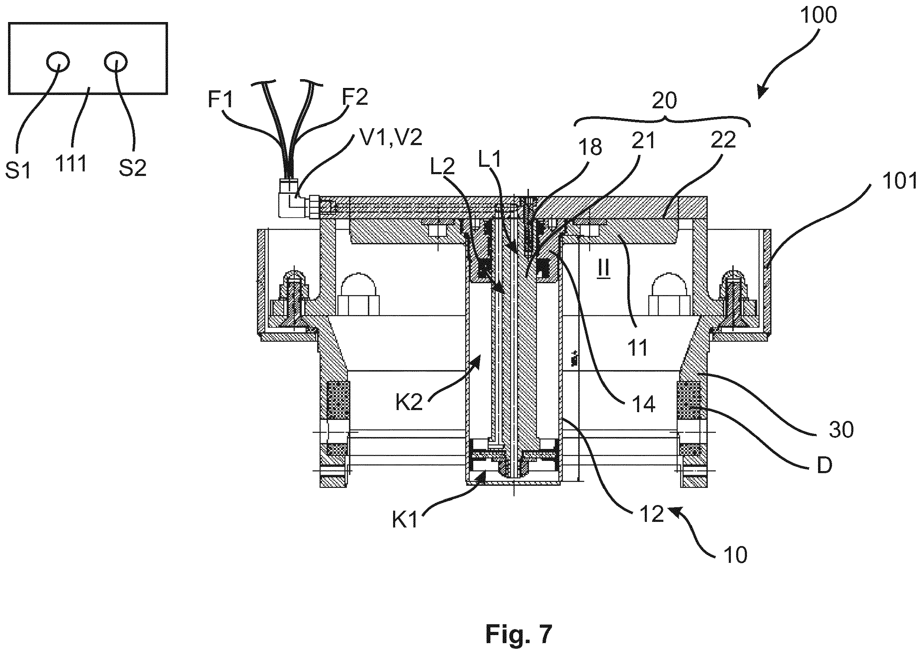

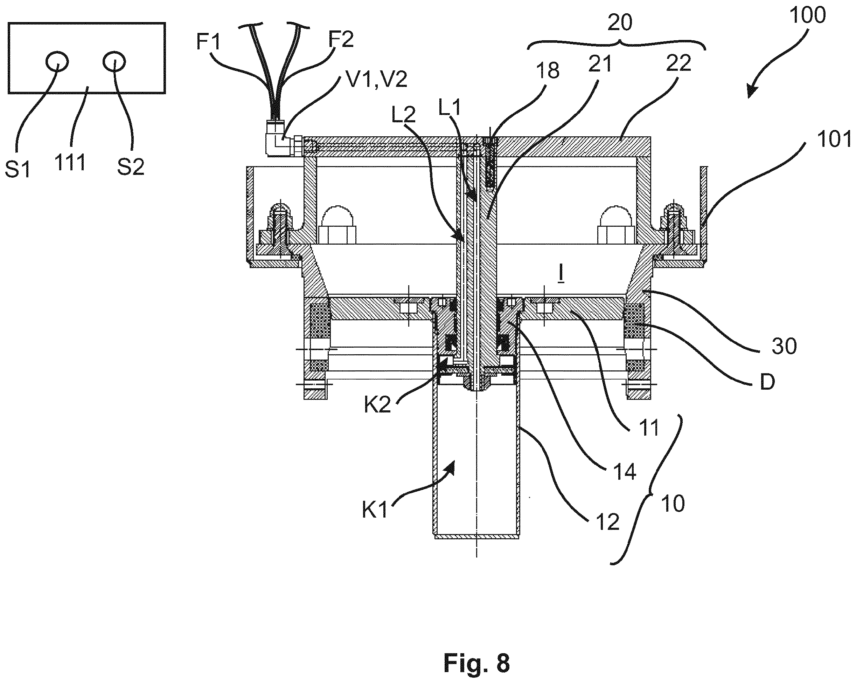

Die Figuren 1 und 2 sowie die Figuren 7 und 8 zeigen eine Ablaufsicherungsvorrichtung 100 im Sinne der Erfindung, die für mindestens einen Ablauf 101, bspw. einen Bodeneinlauf, ein Hofablauf oder Straßenablauf, ausgeführt ist. Die Ablaufsicherungsvorrichtung 100 weist dabei folgende Baugruppen auf: eine Verschlussbaugruppe 10 zum Verschließen und zum Öffnen (gemeint es abwechselndes Verschließen oder Öffnen) des Ablaufes 101 und eine Betätigungsbaugruppe 20 zum Betätigen, insbesondere zum Ansteuern, der Verschlussbaugruppe 10, wobei die Verschlussbaugruppe 10 eine Dichtscheibe 11 für den Ablauf 101 aufweist, und wobei die Dichtscheibe 11 zwischen zwei Positionen I, II bewegbar ist: einer Schließposition I (siehe Figur 8), in welcher der Ablauf 101 durch die Dichtscheibe 11 verschlossen ist, und einer Freigabeposition II (siehe Figur 7), in welcher der Ablauf 101 durch die Dichtscheibe 11 geöffnet ist.

Bei der erfindungsgemäßen Ablaufsicherungsvorrichtung 100 ist es vorgesehen, dass die Betätigungsbaugruppe 20 als eine automatische und/oder automatisierte Steuerungsvorrichtung, vorzugsweise mit einer Fernsteuerungsvorrichtung 111, die als Bedienvorrichtung und/oder Schaltvorrichtung dienen kann, ausgeführt ist. Auf die Fernsteuerungsvorrichtung 111 wird unten noch im Detail eingegangen. Die automatische und/oder automatisierte Betätigungsbaugruppe 20 dient vorteilhafterweise dazu, um die Verschlussbaugruppe 10 auf Abstand zur Verschlussbaugruppe 10, insbesondere ohne einen direkten Kontakt von Bedienelementen, wie z. B. Schwenkschlüssel, die durch einen Bedienperson greifbar sind, mit der Verschlussbaugruppe 10, zu betätigen, insbesondere anzusteuern und somit die Dichtscheibe 11 zwischen der Schließposition I und der Freigabeposition II zu überführen.

Automatisch heißt im Sinne der Erfindung, dass die Betätigungsbaugruppe 20 im Wesentlichen ohne Aufwenden einer Muskelkraft betätigt werden kann, bspw. per Knopfdruck und/oder Schalterbetätigung. Automatisiert heißt im Sinne der Erfindung, dass die Betätigungsbaugruppe 20 maschinell, d. h. ohne ein manuelles Mitwirken von Bedienpersonal betätigt, insbesondere angesteuert, werden kann, um die Dichtscheibe 11 zwischen der Schließposition I und der Freigabeposition II zu überführen.

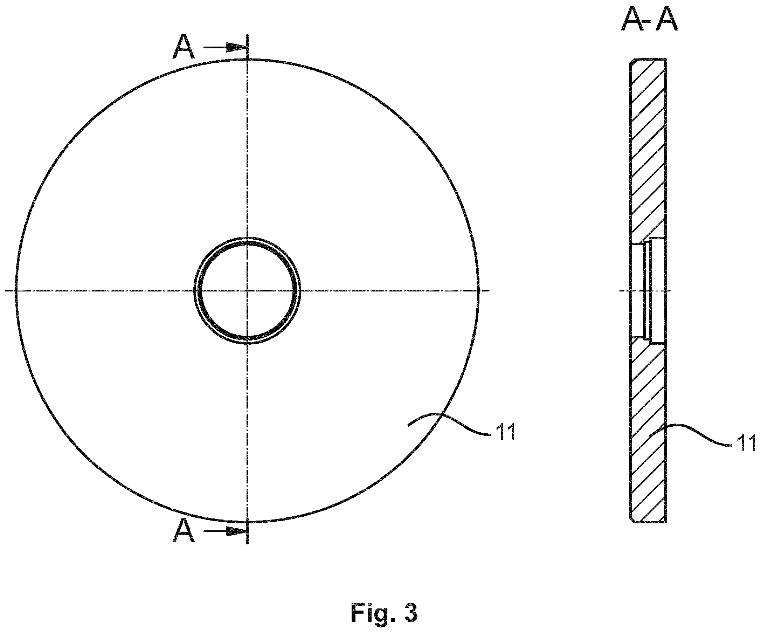

Wie es die Figur 3 andeutet, kann die Dichtscheibe 11 in Form einer massiven Platte, bspw. aus Edelstahl, ausgeführt sein, die beim Anliegen an einer Dichtung D in einem Ablaufgehäuse 30 eine Ablauföffnung A abschließen und abdichten kann. Alternativ kann vorgesehen sein, die Dichtung D an der Dichtscheibe 11, die gegen eine Innenfläche des Ablaufgehäuses 30 zur Auflage kommen kann, um die Ablauföffnung A dichtend abzuschließen.

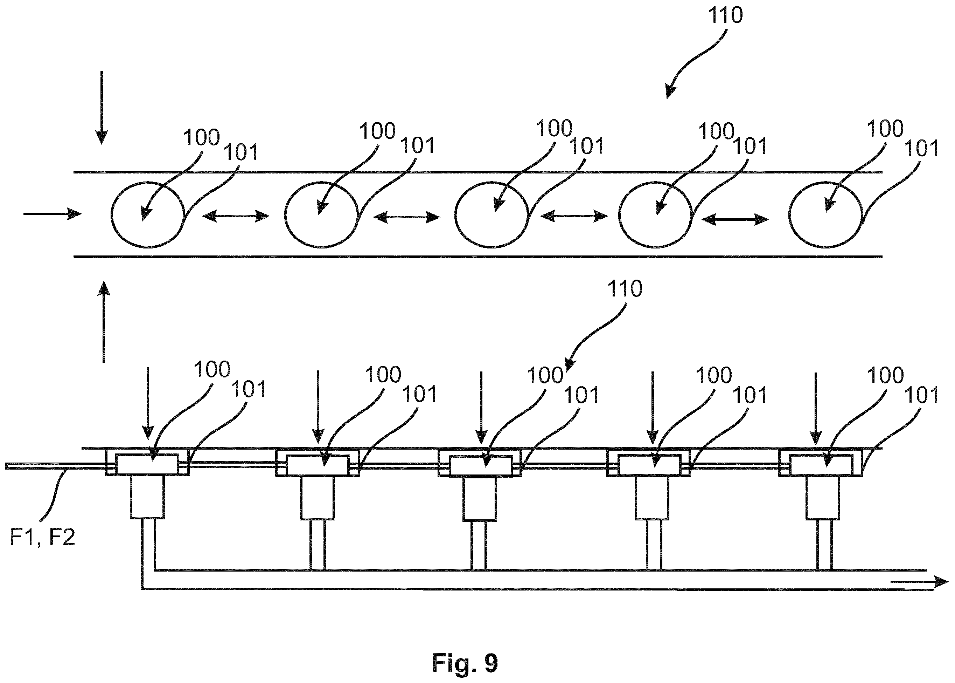

Wie es aus den Figuren 1 und sowie 7 und 8 ersichtlich ist, kann die automatische und/oder automatisierte Ablaufsicherungsvorrichtung 100 im Sinne der Erfindung vorzugsweise pneumatisch oder hydraulisch ausgeführt sein. Die automatische und/oder automatisierte Ablaufsicherungsvorrichtung 100 kann vorteilhafterweise zum sicheren Einsatz in Industrie- und Gewerbegebieten sowie in privaten und öffentlichen Gebäuden und Einrichtungen dienen und vor dem ungewollten Eindringen von Gefahrenstoffen in die Kanalisation oder Ausdringen von Abwasser aus der Kanalisation schützen. Die automatische und/oder automatisierte Ablaufsicherungsvorrichtung 100 kann nach einem weiteren wesentlichen Vorteil der Erfindung die Bedienpersonen zuverlässig vor einem Kontakt mit Gefahrenstoffen und/oder Abwasser schützen. Zudem kann die automatische und/oder automatisierte Ablaufsicherungsvorrichtung 100 einfach, bequem und leicht bedient werden. Die automatische und/oder automatisierte Ablaufsicherungsvorrichtung 100 kann weiterhin völlig automatisiert bzw. maschinell betätigt werden, was sogar ohne ein manuelles Zutun von Bedienpersonal, bspw. nach einem Schaltplan, erfolgen kann. Die automatische und/oder automatisierte Ablaufsicherungsvorrichtung 100 kann zudem auf eine vorteilhafte Weise im Rahmen eines verbesserten Ablaufsicherungssystems 110 mit mehreren Ablaufsicherungsvorrichtungen 100 eingesetzt werden, wie es beispielhaft in der Figur 9 gezeigt ist. Dabei können die mehreren Ablaufsicherungsvorrichtungen 100 simultan oder einzeln betätigt werden. Besonders vorteilhaft kann die erfindungsgemäße Ablaufsicherungsvorrichtung 100 in den Anlagen zum Lagern, Abfüllen, Herstellen und Behandeln von wassergefährdenden Stoffen, in explosionsgefährdeten Bereichen, sowie in Bereichen nach Lösch- und Reinigungsarbeiten verwendet werden.

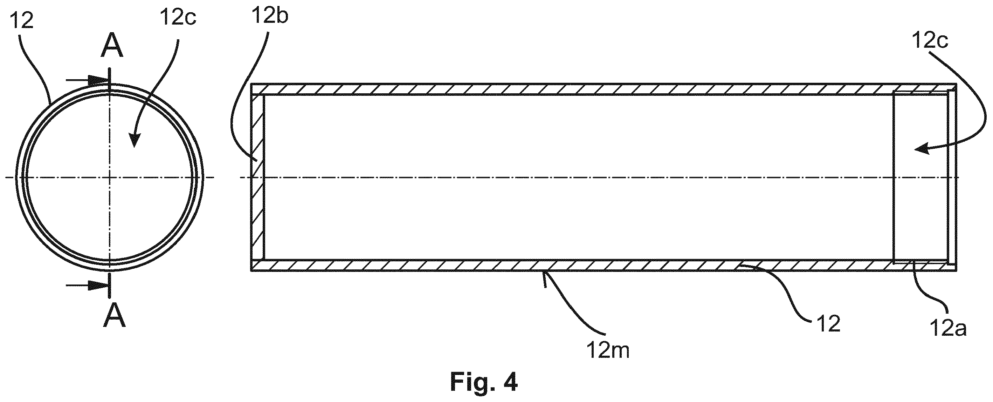

Wie es die Figuren 1, 2, 7, und 8 in Verbindung mit der Figur 4 zeigen, kann die Verschlussbaugruppe 10 einen Hubzylinder 12 (siehe außerdem die Figur 4) aufweisen, welcher mit der Dichtscheibe 11 verbunden, bspw. stoffschlüssig befestigt, z. B. verschweißt, ist, und welcher vorzugsweise zum Bewegen der Dichtscheibe 11 ausgeführt ist. Innerhalb des Hubzylinders 12 kann ein geschlossener Innenraum für ein Druckfluid geschaffen werden. In dem Innenraum können vorzugsweise zwei Steuerkammern K1, K2 ausgebildet werden.

Wird eine erste Steuerkammer K1 mit einem Druckfluid befüllt, so bewegt sich der Hubzylinder 12 in eine Richtung nach unten. Zusammen mit dem Hubzylinder 12 gelangt die Dichtscheibe 11 in die Schließposition I (vgl. Figur 8). Wird eine zweite Steuerkammer K2 mit einem Druckfluid befüllt, so bewegt sich der Hubzylinder 12 in eine Richtung nach oben. Zusammen mit dem Hubzylinder 12 gelangt die Dichtscheibe 11 in die Freigabeposition II (vgl. Figur 7). Somit kann die Dichtscheibe 11 zwischen der Schließposition I und der Freigabeposition II überführt werden.

Die erfindungsgemäße Ablaufsicherungsvorrichtung 100 kann ein erstes Ventil V1 zum Befüllen der ersten Steuerkammer K1 und somit zum Ansteuern der Dichtscheibe 11 aus der Freigabeposition II in die Schließposition I und ein zweites Ventil L2 zum Befüllen der zweiten Steuerkammer K2 und somit zum Ansteuern der Dichtscheibe 11 aus der Schließposition I in die Freigabeposition II aufweisen.

Zum Befüllen der ersten Steuerkammer K1 und somit zum Ansteuern der Dichtscheibe 11 aus der Freigabeposition II in die Schließposition I kann das Druckfluid durch das erste Ventil V1 befördert werden. Zugleich kann das zweite Ventil V2 am Steuerkolbenhalter 22 geöffnet werden, damit das Druckfluid aus der zweiten Steuerkammer K2 entweichen kann. Nachdem Dichtscheibe 11 die Schließposition I erreicht hat, kann das erste Ventil V1 geschlossen werden und das zweite Ventil V2 offen gehalten werden.

Zum Befüllen der zweiten Steuerkammer K2 und somit zum Ansteuern der Dichtscheibe 11 aus der Schließposition I in die Freigabeposition II kann das Druckfluid durch das zweite Ventil V2 befördert werden. Zugleich kann das erste Ventil V1 geöffnet werden, damit das Druckfluid aus der ersten Steuerkammer K1 entweichen kann. Nach dem Dichtscheibe 11 die Freigabeposition II erreicht hat, kann das zweite Ventil V2 geschlossen werden und das erste Ventil V1 am Steuerkolbenhalter 22 offen gehalten werden.

Wie es die Figuren 1, 2, 7, und 8 zeigen, kann der Hubzylinder 12 becherförmig mit einem Boden 12b und einer Mantelfläche 12m ausgeführt sein. Die Dichtscheibe 11 kann dabei kragenförmig an einer Öffnung 12c des Hubzylinders 12 angeordnet sein.

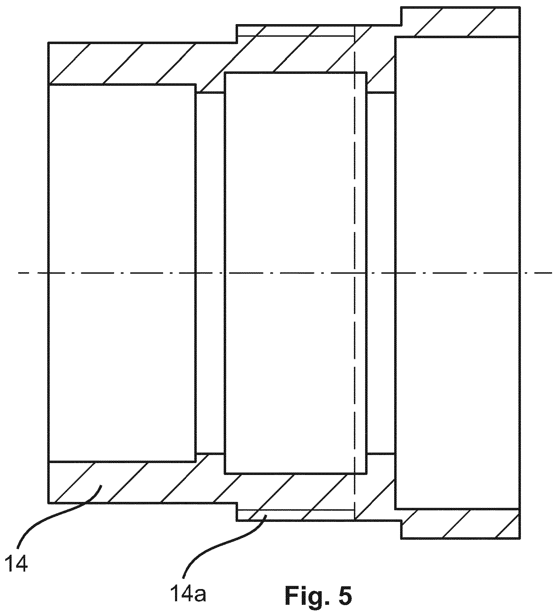

Zudem zeigen die Figuren 1, 2, 7, und 8 in Verbindung mit der Figur 5, dass der Hubzylinder 12 einen, insbesondere hülsenförmigen und/oder stufigen, Zylinderkopf 14 (siehe außerdem die Figur 5) aufweisen kann, um einen Innenraum im Hubzylinder 12 zu begrenzen, insbesondere dichtend abzuschließen, und/oder um eine Führungsfläche für die Dichtscheibe 11 beim Gleiten an dem Steuerkolben 21 zwischen der Schließposition I und der Freigabeposition II bereitzustellen. Dabei kann der Zylinderkopf 14 mit dem Hubzylinder 12 verbunden, bspw. form- und/oder kraftschlüssig befestigt, insbesondere verschraubt, sein. Wie es die Figuren 4 und 5 verdeutlichen, kann hierzu der Zylinderkopf 14 eine Außenverzahnung 14a aufweisen, die mit einer Innenverzahnung 12a nahe der Öffnung 12c am Hubzylinder 12 verschraubt werden kann.

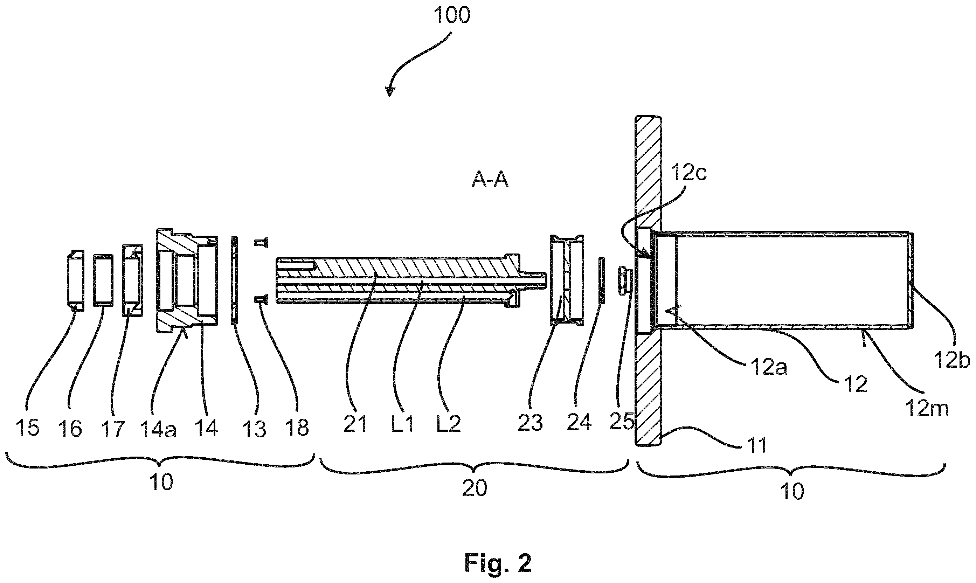

Wie es aus den Figuren 1 und 2 ersichtlich ist, können zwischen dem Zylinderkopf 14 und Steuerkolben 21 sowie koaxial zu dem Steuerkolben 21 folgende Elemente angeordnet sein:
- ein Abstreifring 15, insbesondere aus einem Dichtungsmaterial, bspw. Elastomer, zum Abdichten der zweiten Steuerkammer K2 zwischen dem Steuerkolben 21 und dem Hubzylinder 12 nach außen und/oder zum Abstreifen von Witterungsrückständen und/oder Schmutzrückständen vom Steuerkolben 21, insbesondere beim Überführen der Dichtscheibe 11 aus der Schließposition I in die Freigabeposition II,
- ein Führungsband 16, insbesondere aus einem Polymer, bspw. umfassend Fluor und/oder Kohlenstoff, zum Reduzieren der Reibung beim Gleiten der Dichtscheibe 11 an dem Steuerkolben 21 zwischen der Schließposition I und der Freigabeposition II, und/oder
- ein Lippenring 17, insbesondere aus einem Dichtungsmaterial, bspw. Elastomer, zum Abdichten der zweiten Steuerkammer K2 zwischen dem Steuerkolben 21 und dem Hubzylinder 12 nach außen, insbesondere beim Überführen der Dichtscheibe 11 aus der Freigabeposition II in die Schließposition I.

Der Lippenring 17 kann dabei mithilfe einer Deckelscheibe 13 am Zylinderkopf 14 angeordnet werden, die mit dem Zylinderkopf 14 verbunden, bspw. form- und/oder kraftschlüssig befestigt, insbesondere verschraubt, sein kann (vgl. die Figuren 1 und 2).

Im Rahmen der Erfindung ist es denkbar, dass die Dichtscheibe 11 und der Hubzylinder 12 aus einem Metall oder einer Metalllegierung, vorzugsweise Edelstahl, ausgebildet sein können.

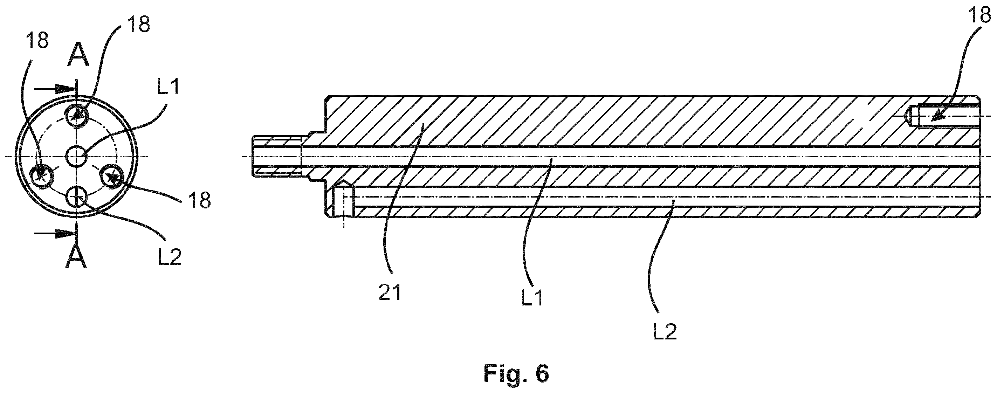

Wie oben bereits erwähnt und wie es die Figuren 1, 2, 7 und 9 in Verbindung mit der Figur 6 zeigen, kann die Betätigungsbaugruppe 20 einen Steuerkolben 21 aufweisen, welcher dazu ausgeführt ist, eine Lauffläche für die Dichtscheibe 11 beim Bewegen zwischen der Schließposition I und der Freigabeposition II und/oder eine, insbesondere hydraulische oder pneumatische Hilfsenergie, zum Betätigen der Verschlussbaugruppe 10 bereitzustellen.

Die Figuren 7 und 8 zeigen außerdem, dass die Betätigungsbaugruppe 20 einen Steuerkolbenhalter 22 aufweist, welcher dazu ausgeführt ist, den Steuerkolben 21 zu halten und/oder eine, insbesondere hydraulische oder pneumatische Hilfsenergie, zum Betätigen der Verschlussbaugruppe 10 bereitzustellen. Wie es die Figuren 6, 7 und 8 andeuten, können der Steuerkolbenhalter 22 und der Steuerkolben 21 mithilfe von drei Schrauben miteinander verschraubt werden. Optional ist es denkbar, dass an den Übergängen der Leitungen L1, L2 aus dem Steuerkolbenhalter 22 in den Steuerkolben 21 Dichtungen vorgesehen sein können, um ein Entweichen des Druckfluides zwischen dem Steuerkolbenhalter 22 und dem Steuerkolben 21 zu vermeiden.

Wie oben in Verbindung mit der Figur 4 bereits angedeutet wurde, können der Steuerkolben 21 und der Hubzylinder 12 derart zueinander angeordnet sein, dass zwischen dem Steuerkolben 21 und dem Hubzylinder 12 zwei fluiddicht zueinander und nach außen abgedichtete Steuerkammer K1, K2 ausgebildet sind: eine erste Steuerkammer K1 dient dabei zum Überführen der Dichtscheibe 11 aus der Freigabeposition II in die Schließposition I und eine zweite Steuerkammer K2 dient zum Überführen der Dichtscheibe 11 aus der Schließposition I in die Freigabeposition II.

Unten am Steuerkolben 21 kann eine Kolbendichtung 23, bspw. aus einem Kautschuk, z. B. Nitrilkautschuk, zum Abdichten der ersten Steuerkammer K1 von der zweiten Steuerkammer K2 angeordnet sein, die mithilfe einer Unterlegscheibe 24 am Steuerkolben 21 gehalten werden kann, die wiederum mithilfe einer Schraubmutter 25 am Steuerkolben 21 befestigt, insbesondere verschraubt, sein kann.

Durch den Steuerkolbenhalter 22 und den Steuerkolben 21 verlaufen zwei Steuerleitungen L1, L2, die in die Steuerkammern K1, K2 münden. Die erste Steuerleitung L1 dient zum Überführen der Dichtscheibe 11 aus der Freigabeposition II in die Schließposition I und ist hierzu fluidisch an die erste Steuerkammer K1 angeschlossen. Die zweite Steuerleitung L2 dient zum Überführen der Dichtscheibe 11 aus der Schließposition I in die Freigabeposition II und ist hierzu fluidisch an die zweite Steuerkammer K2 angeschlossen.

Am Steuerkolbenhalter 22 sind die Steuerventile V1, V2 zum Betätigen der Verschlussbaugruppe 10 vorgesehen. Das erste Ventil V1 dient dabei zum Ansteuern der Dichtscheibe 11 aus der Freigabeposition II in die Schließposition I und das zweite Ventil L2 zum Ansteuern der Dichtscheibe 11 aus der Schließposition I in die Freigabeposition II. Das erste Ventil V1 ist an die erste Steuerleitung L1 angeschlossen und das zweite Ventil V2 ist an die zweite Steuerleitung L2 angeschlossen.

Der Steuerkolbenhalter 22 und der Steuerkolben 21 können ebenfalls aus einem Metall oder einer Metalllegierung, vorzugsweise Edelstahl, ausgebildet sein.

Weiterhin deuten die Figuren 7 und 8 an, dass der Steuerkolbenhalter 22 über zwei außenliegende Fernleitungen F1, F2, mit einer Fernsteuerungsvorrichtung 111 verbunden ist, die auf Abstand zur Verschlussbaugruppe 10 angeordnet werden können. Die Fernsteuerungsvorrichtung 111 kann dabei mindestens ein Schaltelement S1, bspw. einen Schalthebel, oder zwei Schaltelemente S1, S2, bspw. zwei Schaltknöpfe aufweisen, um die Verschlussbaugruppe 10 zu betätigen.

Im Rahmen der Erfindung können Sensoren für die Schließposition I und/oder die Freigabeposition II der Dichtscheibe 11 vorgesehen sein, die aus Einfachheitsgründen in den Figuren nicht dargestellt sind.

Wie es zudem die Figuren 7 und 8 zeigen, kann ein Ablaufgehäuse 30 zum Abstützen der Betätigungsbaugruppe 20 am Ablauf 101 sowie zum Bestimmen einer Ablauföffnung A am Ablauf 101, die durch die Dichtscheibe 11 verschließbar ist, vorgesehen sein. Das Ablaufgehäuse 30 ist vorzugsweise dazu ausgelegt, um die Ablaufsicherungsvorrichtung 100 nachträglich in bestehende Abläufe 101, wie Bodeneinläufe, Hof- und/oder Straßenabläufe, einzubauen.

Die Figur 9 zeigt ein Ablaufsicherungssystem 110 im Sinne der Erfindung, welches mit mehreren Ablaufsicherungsvorrichtungen 100 ausgeführt ist, die wie oben beschrieben ausgebildet sein können. Dabei können die mehreren Ablaufsicherungsvorrichtungen 100 mithilfe einer Fernsteuerungsvorrichtung 111 alle zusammen und/oder simultan betätigbar sein. Dabei können die mehreren Ablaufsicherungsvorrichtungen 100 seriell verschaltet sein. Alternativ können die mehreren Ablaufsicherungsvorrichtungen 100 mithilfe einer Fernsteuerungsvorrichtung 111 einzeln und/oder zu beliebigen Zeiten betätigbar sein. Simultane oder separate Betätigung kann flexibel nach Kundenwunsch ermöglicht werden.

Die Fernsteuerungsvorrichtung 111 kann wiederum mindestens ein Schaltelement S1 oder zwei Schaltelemente S1, S2 für alle Ablaufsicherungsvorrichtung 100 aufweisen, um die Ablaufsicherungsvorrichtungen 100 zugleich betätigen zu können, oder mindestens ein Schaltelement S1 oder zwei Schaltelemente S1, S2 für jede Ablaufsicherungsvorrichtung 100 aufweisen, um die Ablaufsicherungsvorrichtungen 100 einzeln und/oder zu beliebigen Zeiten betätigen zu können.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, im Rahmen der nachfolgenden Ansprüche miteinander kombiniert werden, ohne den Rahmen der vorliegenden Erfindung zu verlassen.

### Bezugszeichenliste

- 110: Ablaufsicherungssystem
- 111: Fernsteuerungsvorrichtung

- 100: Ablaufsicherungsvorrichtung
- 101: Ablauf

- 10: Verschlussbaugruppe
- 11: Dichtscheibe
- 12: Hubzylinder
- 12a: Innenverzahnung
- 12b: Boden
- 12c: Öffnung
- 12m: Mantelfläche
- 13: Deckelscheibe
- 14: Zylinderkopf
- 14a: Außenverzahnung
- 15: Abstreifring
- 16: Führungsband
- 17: Lippenring
- 18: Schraube

- 20: Betätigungsbaugruppe
- 21: Steuerkolben
- 22: Steuerkolbenhalter
- 23: Kolbendichtung
- 24: Unterlegscheibe
- 25: Schraubmutter

- 30: Ablaufgehäuse
- I: Schließposition
- II: Freigabeposition

- A: Ablauföffnung

- D: Dichtung

- F1: Fernleitung
- F2: Fernleitung

- K1: erste Steuerkammer
- K2: zweite Steuerkammer

- L1: erste Steuerleitung
- L2: zweite Steuerleitung

- S1: Schaltelement
- S2: Schaltelement

- V1: erstes Ventil
- V2: zweites Ventil

## Patentansprüche

1. Ablaufsicherungsvorrichtung (100) für mindestens einen Ablauf (101), insbesondere einen Bodeneinlauf, einen Hofablauf oder Straßenablauf, aufweisend:
eine Verschlussbaugruppe (10) zum Verschließen und zum Öffnen des Ablaufes (101)
und eine Betätigungsbaugruppe (20) zum Betätigen der Verschlussbaugruppe (10),
wobei die Verschlussbaugruppe (10) eine Dichtscheibe (11) für den Ablauf (101) aufweist,
und wobei die Dichtscheibe (11) zwischen zwei Positionen (I, II) bewegbar ist:
- einer Schließposition (I), in welcher der Ablauf (101) durch die Dichtscheibe (11) verschlossen ist, und
- einer Freigabeposition (II), in welcher der Ablauf (101) durch die Dichtscheibe (11) geöffnet ist,
wobei die Betätigungsbaugruppe (20) als eine automatische und/oder automatisierte Steuerungsvorrichtung ausgeführt ist, um die Verschlussbaugruppe (10) auf Abstand zur Verschlussbaugruppe (10) zu betätigen und um die Dichtscheibe (11) zwischen der Schließposition (I) und der Freigabeposition (II) zu überführen,
wobei die Verschlussbaugruppe (10) einen Hubzylinder (12) aufweist, welcher mit der Dichtscheibe (11) verbunden ist, und welcher zum Bewegen der Dichtscheibe (11) ausgeführt ist,
wobei die Betätigungsbaugruppe (20) einen Steuerkolben (21) aufweist, welcher dazu ausgeführt ist, eine Lauffläche für die Dichtscheibe (11) beim Bewegen zwischen der Schließposition (I) und der Freigabeposition (II) bereitzustellen,
und wobei die Betätigungsbaugruppe (20) einen Steuerkolbenhalter (22) aufweist, welcher dazu ausgeführt ist, den Steuerkolben (21) zu halten,
**dadurch gekennzeichnet,**
**dass** der Steuerkolbenhalter (22) und der Steuerkolben (21) eine erste Steuerleitung (L1) zum Überführen der Dichtscheibe (11) aus der Freigabeposition (II) in die Schließposition (I) und eine zweite Steuerleitung (L2) zum Überführen der Dichtscheibe (11) aus der Schließposition (I) in die Freigabeposition (II) aufweisen.

2. Ablaufsicherungsvorrichtung (100) nach Anspruch 1,
**dadurch gekennzeichnet,**
**dass** die Betätigungsbaugruppe (20) als eine hydraulische oder pneumatische Steuerungsvorrichtung ausgeführt ist.

3. Ablaufsicherungsvorrichtung (100) nach Anspruch 1 oder 2,
**dadurch gekennzeichnet,**
**dass** der Hubzylinder (12) mit der Dichtscheibe (11) stoffschlüssig befestigt, insbesondere verschweißt, ist,
und/oder dass der Hubzylinder (12) becherförmig mit einem Boden (12b) und einer Mantelfläche (12m) ausgeführt ist,
und/oder dass die Dichtscheibe (11) kragenförmig an einer Öffnung (12c) des Hubzylinders (12) angeordnet ist,
und/oder dass die Dichtscheibe (11) und/oder der Hubzylinder (12) aus einem Metall oder einer Metalllegierung, insbesondere Edelstahl, ausgebildet sind/ist,
oder dass die Dichtscheibe (11) und/oder der Hubzylinder (12) aus einem Metall oder einer Metalllegierung, insbesondere Leichtmetall, ausgebildet sind/ist und eine Beschichtung aus Edelstahl aufweisen/aufweist.

4. Ablaufsicherungsvorrichtung (100) nach einem der vorhergehenden Ansprüche,
**dadurch gekennzeichnet,**
**dass** der Hubzylinder (12) einen, insbesondere hülsenförmigen und/oder stufigen, Zylinderkopf (14) aufweist, um einen Innenraum im Hubzylinder (12) zu begrenzen, insbesondere dichtend abzuschließen, und/oder um eine Führungsfläche für die Dichtscheibe (11) beim Gleiten an dem Steuerkolben (21) zwischen der Schließposition (I) und der Freigabeposition (II) bereitzustellen,
wobei insbesondere der Zylinderkopf (14) mit dem Hubzylinder (12) verbunden, bspw. form- und/oder kraftschlüssig befestigt, insbesondere verschraubt ist,
wobei vorzugsweise zwischen dem Zylinderkopf (14) und dem Steuerkolben (21) und/oder koaxial zu dem Steuerkolben (21) mindestens eines der folgenden Elemente angeordnet ist:
- ein Abstreifring (15), insbesondere aus einem Dichtungsmaterial, bspw. Elastomer, zum Abdichten einer Steuerkammer (K1, K2) zwischen dem Steuerkolben (21) und dem Hubzylinder (12) nach außen und/oder zum Abstreifen von Witterungsrückständen und/oder Schmutzrückständen vom Steuerkolben (21), insbesondere beim Überführen der Dichtscheibe (11) aus der Schließposition (I) in die Freigabeposition (II),
- ein Führungsband (16), insbesondere aus einem Polymer, bspw. umfassend Fluor und/oder Kohlenstoff, zum Reduzieren der Reibung beim Gleiten der Dichtscheibe (11) an dem Steuerkolben (21) zwischen der Schließposition (I) und der Freigabeposition (II), und/oder
- ein Lippenring (17), insbesondere aus einem Dichtungsmaterial, bspw. Elastomer, zum Abdichten einer Steuerkammer (K1, K2) zwischen dem Steuerkolben (21) und dem Hubzylinder (12) nach außen, insbesondere beim Überführen der Dichtscheibe (11) aus der Freigabeposition (II) in die Schließposition (I),
wobei insbesondere der Lippenring (17) mithilfe einer Deckelscheibe (13) am Zylinderkopf (14) gehalten ist, wobei vorzugsweise die Deckelscheibe (13) mit dem Zylinderkopf (14) verbunden, bspw. form- und/oder kraftschlüssig befestigt, insbesondere verschraubt, ist.

5. Ablaufsicherungsvorrichtung (100) nach einem der vorhergehenden Ansprüche,
**dadurch gekennzeichnet,**
**dass** der Steuerkolben (21) dazu ausgeführt ist, eine, insbesondere hydraulische oder pneumatische Hilfsenergie, zum Betätigen der Verschlussbaugruppe (10) bereitzustellen, und/oder dass der Steuerkolbenhalter (22) dazu ausgeführt ist, eine, insbesondere hydraulische oder pneumatische Hilfsenergie, zum Betätigen der Verschlussbaugruppe (10) bereitzustellen,
und/oder dass der Steuerkolbenhalter (22) mit dem Steuerkolben (21) verbunden, bspw. form- und/oder kraftschlüssig befestigt, insbesondere verschraubt, ist.

6. Ablaufsicherungsvorrichtung (100) nach einem der vorhergehenden Ansprüche,
**dadurch gekennzeichnet,**
**dass** der Steuerkolben (21) und der Hubzylinder (12) derart zueinander angeordnet sind, dass zwischen dem Steuerkolben (21) und dem Hubzylinder (12) mindestens eine, insbesondere zwei, fluiddicht nach außen abgedichtete Steuerkammer (K1, K2) ausgebildet sind,
und/oder dass der Steuerkolben (21) und der Hubzylinder (12) derart zueinander angeordnet sind, dass zwischen dem Steuerkolben (21) und dem Hubzylinder (12) eine erste Steuerkammer (K1) zum Überführen der Dichtscheibe (11) aus der Freigabeposition (II) in die Schließposition (I) und eine zweite Steuerkammer (K2) zum Überführen der Dichtscheibe (11) aus der Schließposition (I) in die Freigabeposition (II) ausgebildet sind.

7. Ablaufsicherungsvorrichtung (100) nach Anspruch 6,
**dadurch gekennzeichnet,**
**dass** der Steuerkolben (21) eine Kolbendichtung (23), insbesondere aus einem Kautschuk, bspw. Nitrilkautschuk, zum Abdichten der ersten Steuerkammer (K1) von der zweiten Steuerkammer (K2) zwischen dem Steuerkolben (21) und dem Hubzylinder (12) aufweist,
wobei insbesondere die Kolbendichtung (23) mithilfe einer Unterlegscheibe (24) am Steuerkolben (21) gehalten ist,
wobei vorzugsweise die Unterlegscheibe (24) mithilfe einer Schraubmutter (25) am Steuerkolben (21) befestigt, insbesondere verschraubt, ist,
und/oder dass die Steuerleitungen (L1, L2) innen durch den Steuerkolbenhalter (22) und den Steuerkolben (21) verlaufen.

8. Ablaufsicherungsvorrichtung (100) nach einem der vorhergehenden Ansprüche 6 oder 7, **dadurch gekennzeichnet,**
**dass** die erste Steuerleitung (L1) zum Überführen der Dichtscheibe (11) aus der Freigabeposition (II) in die Schließposition (I) fluidisch an die erste Steuerkammer (K1) angeschlossen ist
und die zweite Steuerleitung (L2) zum Überführen der Dichtscheibe (11) aus der Schließposition (I) in die Freigabeposition (II) fluidisch an die zweite Steuerkammer (K2) angeschlossen ist.

9. Ablaufsicherungsvorrichtung (100) nach einem der vorhergehenden Ansprüche,
**dadurch gekennzeichnet,**
**dass** der Steuerkolbenhalter (22) zwei Steuerventile (V1, V2) zum Betätigen der Verschlussbaugruppe (10) aufweist,
und/oder dass der Steuerkolbenhalter (22) ein erstes Ventil (V1) zum Ansteuern der Dichtscheibe (11) aus der Freigabeposition (II) in die Schließposition (I) und ein zweites Ventil (L2) zum Ansteuern der Dichtscheibe (11) aus der Schließposition (I) in die Freigabeposition (II) aufweist,
wobei insbesondere das erste Ventil (V1) zum Überführen der Dichtscheibe (11) aus der Freigabeposition (II) in die Schließposition (I) an die erste Steuerleitung (L1) angeschlossen ist
und das zweite Ventil (V2) zum Überführen der Dichtscheibe (11) aus der Schließposition (I) in die Freigabeposition (II) fluidisch an die zweite Steuerleitung (L2) angeschlossen ist.

10. Ablaufsicherungsvorrichtung (100) nach einem der vorhergehenden Ansprüche,
**dadurch gekennzeichnet,**
**dass** der Steuerkolbenhalter (22) und/oder der Steuerkolben (21) aus einem Metall oder einer Metalllegierung, insbesondere Edelstahl, ausgebildet sind/ist,
oder dass der Steuerkolbenhalter (22) und/oder der Steuerkolben (21) aus einem Metall oder einer Metalllegierung, insbesondere Leichtmetall, ausgebildet sind/ist und eine Beschichtung aus Edelstahl aufweisen/aufweist,
und/oder dass der Steuerkolbenhalter (22), vorzugsweise über mindestens eine, insbesondere zwei, außenliegende Fernleitungen (F1, F2), mit einer Fernsteuerungsvorrichtung (111) verbunden ist, die auf Abstand zur Verschlussbaugruppe (10) anordbar ist.

11. Ablaufsicherungsvorrichtung (100) nach einem der vorhergehenden Ansprüche,
**dadurch gekennzeichnet,**
**dass** die Fernsteuerungsvorrichtung (111) zum Ansteuern der Dichtscheibe (11) aus der Freigabeposition (II) in die Schließposition (I) dazu ausgeführt ist,
einen Druckfluid durch das erste Ventil (V1) am Steuerkolbenhalter (22) zu befördern und das zweite Ventil (V2) am Steuerkolbenhalter (22) zu öffnen, während die Dichtscheibe (11) aus der Freigabeposition (II) in die Schließposition (I) verfährt,
und das erste Ventil (V1) am Steuerkolbenhalter (22) zu schließen und das zweite Ventil (V2) am Steuerkolbenhalter (22) offen zu halten, nach dem Dichtscheibe (11) die Schließposition (I) erreicht hat,
und/oder dass die Fernsteuerungsvorrichtung (111) zum Ansteuern der Dichtscheibe (11) aus der Schließposition (I) in die Freigabeposition (II) dazu ausgeführt ist,
ein Druckfluid durch das zweite Ventil (V2) am Steuerkolbenhalter (22) zu befördern und das erste Ventil (V1) am Steuerkolbenhalter (22) zu öffnen, während die Dichtscheibe (11) aus der Schließposition (I) in die Freigabeposition (II) verfährt,
und das zweite Ventil (V2) am Steuerkolbenhalter (22) zu schließen und das erste Ventil (V1) am Steuerkolbenhalter (22) offen zu halten, nach dem Dichtscheibe (11) die Freigabeposition (II) erreicht hat,
und/oder dass die Fernsteuerungsvorrichtung (111) mindestens ein Schaltelement (S1), insbesondere ein Schalthebel, oder zwei Schaltelemente (S1, S2), insbesondere zwei Schaltknöpfe aufweist, um die Verschlussbaugruppe (10) zu betätigen.

12. Ablaufsicherungsvorrichtung (100) nach einem der vorhergehenden Ansprüche,
**dadurch gekennzeichnet,**
**dass** mindestens ein Sensor für die Schließposition (I) und/oder die Freigabeposition (II) der Dichtscheibe (11) vorgesehen ist.

13. Ablaufsicherungsvorrichtung (100) nach einem der vorhergehenden Ansprüche,
**dadurch gekennzeichnet,**
**dass** ein Ablaufgehäuse (30) zum Abstützen der Betätigungsbaugruppe (20) am Ablauf (101) und/oder zum Bestimmen einer Ablauföffnung (A) am Ablauf (101), die durch die Dichtscheibe (11) verschließbar ist, vorgesehen ist.

14. Ablaufsicherungssystem (110) mit mehreren Ablaufsicherungsvorrichtungen (100) nach dem der vorhergehenden Ansprüche.

15. Ablaufsicherungssystem (110) nach dem vorhergehenden Anspruch,
**dadurch gekennzeichnet,**
**dass** die mehreren Ablaufsicherungsvorrichtungen (100) mithilfe einer Fernsteuerungsvorrichtung (111) alle zusammen und/oder simultan betätigbar sind, die auf Abstand zu den mehreren Ablaufsicherungsvorrichtungen (100) anordbar ist,
wobei insbesondere die mehreren Ablaufsicherungsvorrichtungen (100) seriell verschaltet sind,
oder die mehreren Ablaufsicherungsvorrichtungen (100) mithilfe einer Fernsteuerungsvorrichtung (111) einzeln und/oder zu beliebigen Zeiten betätigbar sind, die auf Abstand zu den mehreren Ablaufsicherungsvorrichtungen (100) anordbar ist,
und/oder dass die Fernsteuerungsvorrichtung (111) mindestens ein Schaltelement (S1) oder zwei Schaltelemente (S1, S2) für alle Ablaufsicherungsvorrichtung (100) aufweist, um die Ablaufsicherungsvorrichtungen (100) zusammen und/oder simultan zu betätigen, oder dass die Fernsteuerungsvorrichtung (111) mindestens ein Schaltelement (S1) oder zwei Schaltelemente (S1, S2) pro Ablaufsicherungsvorrichtung (100) aufweist, um die Ablaufsicherungsvorrichtungen (100) einzeln und/oder zu beliebigen Zeiten zu betätigen.

## Claims

1. Drainage safety device (100) for at least one drain (101), in particular a floor inlet, a yard drain or a street drain:
a closure assembly (10) for closing and opening the drain (101)
and an actuating assembly (20) for actuating the closure assembly (10),
wherein the closure assembly (10) has a sealing disk (11) for the drain (101),
and wherein the sealing disk (11) can be moved between two positions (I, II):
- a closed position (I), in which the drain (101) is closed by the sealing disk (11), and
- a release position (II) in which the drain (101) is opened by the sealing disk (11),
wherein the actuating assembly (20) is designed as an automatic and/or automated control device for actuating the closure assembly (10) at a distance from the closure assembly (10) and for transferring the sealing disk (11) between the closed position (I) and the release position (II),
wherein the closure assembly (10) has a lifting cylinder (12) which is connected to the sealing disk (11) and which is designed to move the sealing disk (11),
wherein the actuating assembly (20) has a control piston (21) which is designed to provide a running surface for the sealing disk (11) when moving between the closed position (I) and the release position (II),
and wherein the actuating assembly (20) has a control piston holder (22) which is designed to hold the control piston (21),
**characterized in that**
the control piston holder (22) and the control piston (21) have a first control line (L1) for transferring the sealing disk (11) from the release position (II) to the closed position (I) and a second control line (L2) for transferring the sealing disk (11) from the closed position (I) to the release position (II).

2. Drainage safety device (100) according to claim 1,
**characterized in that**
the actuating assembly (20) is designed as a hydraulic or pneumatic control device.

3. Drainage safety device (100) according to claim 1 or 2,
**characterized in that**
the lifting cylinder (12) is fixed, in particular welded, to the sealing disk (11) with a material bond,
and/or that the lifting cylinder (12) is cup-shaped with a base (12b) and a lateral surface (12m),
and/or that the sealing disk (11) is arranged in the shape of a collar at an opening (12c) of the lifting cylinder (12),
and/or that the sealing disk (11) and/or the lifting cylinder (12) are/is made of a metal or a metal alloy, in particular stainless steel,
or that the sealing disk (11) and/or the lifting cylinder (12) is/are made of a metal or a metal alloy, in particular light metal, and has/have a coating of stainless steel.

4. Drainage safety device (100) according to one of the preceding claims,
**characterized in that**
the lifting cylinder (12) has a cylinder head (14), in particular a sleeve-shaped and/or stepped cylinder head (14), in order to delimit an internal space in the lifting cylinder (12), in particular to seal it off, and/or in order to provide a guide surface for the sealing disk (11) when sliding on the control piston (21) between the closed position (I) and the release position (II),
wherein, in particular, the cylinder head (14) is connected to the lifting cylinder (12), e.g. positively and/or non-positively fastened, in particular bolted,
wherein at least one of the following elements is preferably arranged between the cylinder head (14) and the control piston (21) and/or coaxially to the control piston (21):
- a wiper ring (15), in particular made of a sealing material, e.g. elastomer, for sealing a control chamber (K1, K2) between the control piston (21) and the lifting cylinder (12) to the outside and/or for wiping off weather residues and/or dirt residues from the control piston (21), in particular when transferring the sealing disk (11) from the closed position (I) to the release position (II),
- a guide band (16), in particular made of a polymer, for example comprising fluorine and/or carbon, for reducing the friction when the sealing disk (11) slides on the control piston (21) between the closed position (I) and the release position (II), and/or
- a lip ring (17), in particular made of a sealing material, e.g. elastomer, for sealing a control chamber (K1, K2) between the control piston (21) and the lifting cylinder (12) to the outside, in particular when transferring the sealing disk (11) from the release position (II) to the closed position (I),
wherein in particular the lip ring (17) is held on the cylinder head (14) with the aid of a cover disk (13), wherein preferably the cover disk (13) is connected to the cylinder head (14), e.g. positively and/or non-positively fastened, in particular screwed.

5. Drainage safety device (100) according to one of the preceding claims,
**characterized in that**
the control piston (21) is designed to provide an auxiliary energy, in particular hydraulic or pneumatic auxiliary energy, for actuating the closure assembly (10),
and/or that the control piston holder (22) is designed to provide an auxiliary energy, in particular hydraulic or pneumatic auxiliary energy, for actuating the closure assembly (10),
and/or that the control piston holder (22) is connected to the control piston (21), e.g. positively and/or non-positively fastened, in particular screwed.

6. Drainage safety device (100) according to one of the preceding claims,
**characterized in that**
the control piston (21) and the lifting cylinder (12) are arranged relative to one another in such a way that at least one, in particular two, control chambers (K1, K2) sealed fluid-tight to the outside are formed between the control piston (21) and the lifting cylinder (12),
and/or **in that** the control piston (21) and the lifting cylinder (12) are arranged relative to one another in such a way that a first control chamber (K1) for transferring the sealing disk (11) from the release position (II) into the closed position (I) and a second control chamber (K2) for transferring the sealing disk (11) from the closed position (I) into the release position (II) are formed between the control piston (21) and the lifting cylinder (12).

7. Drainage safety device (100) according to claim 6,
**characterized in that**
the control piston (21) has a piston seal (23), in particular made of a rubber, for example nitrile rubber, for sealing the first control chamber (K1) from the second control chamber (K2) between the control piston (21) and the lifting cylinder (12),
wherein in particular the piston seal (23) is held on the control piston (21) by means of a washer (24),
wherein the washer (24) is preferably fastened, in particular screwed, to the control piston (21) by means of a screw nut (25),
and/or that the control lines (L1, L2) run internally through the control piston holder (22) and the control piston (21).

8. Drainage safety device (100) according to any of the preceding claims 6 or 7,
**characterized in that**
the first control line (L1) for transferring the sealing disk (11) from the release position (II) to the closed position (I) is fluidically connected to the first control chamber (K1)
and the second control line (L2) for transferring the sealing disk (11) from the closed position (I) to the release position (II) is fluidically connected to the second control chamber (K2).

9. Drainage safety device (100) according to one of the preceding claims,
**characterized in that**
the control piston holder (22) has two control valves (V1, V2) for actuating the closure assembly (10),
and/or **in that** the control piston holder (22) has a first valve (V1) for actuating the sealing disk (11) from the release position (II) into the closed position (I) and a second valve (L2) for actuating the sealing disk (11) from the closed position (I) into the release position (II), wherein in particular the first valve (V1) for transferring the sealing disk (11) from the release position (II) to the closed position (I) is connected to the first control line (L1)
and the second valve (V2) for transferring the sealing disk (11) from the closed position (I) to the released position (II) is fluidically connected to the second control line (L2).

10. Drainage safety device (100) according to one of the preceding claims,
**characterized in that**
the control piston holder (22) and/or the control piston (21) are/is made of a metal or a metal alloy, in particular stainless steel,
or that the control piston holder (22) and/or the control piston (21) is/are made of a metal or a metal alloy, in particular light metal, and has/have a coating of stainless steel,
and/or **in that** the control piston holder (22) is connected, preferably via at least one, in particular two, external remote lines (F1, F2), to a remote control device (111) which can be arranged at a distance from the closure assembly (10).

11. Drainage safety device (100) according to one of the preceding claims,
**characterized in that**
the remote control device (111) is designed to move the sealing disk (11) from the release position (II) into the closed position (I),
to convey a pressurized fluid through the first valve (V1) on the control piston holder (22) and to open the second valve (V2) on the control piston holder (22) while the sealing disc (11) moves from the release position (II) to the closed position (I),
and to close the first valve (V1) on the control piston holder (22) and to keep the second valve (V2) on the control piston holder (22) open after the sealing disk (11) has reached the closed position (I),
and/or **in that** the remote control device (111) is designed to move the sealing disk (11) from the closed position (I) to the release position (II),
to convey a pressurized fluid through the second valve (V2) on the control piston holder (22) and to open the first valve (V1) on the control piston holder (22) while the sealing disc (11) moves from the closed position (I) to the release position (II),
and to close the second valve (V2) on the control piston holder (22) and to keep the first valve (V1) on the control piston holder (22) open after the sealing disk (11) has reached the release position (II),
and/or **in that** the remote control device (111) has at least one switching element (S1), in particular a switching lever, or two switching elements (S1, S2), in particular two switching buttons, in order to actuate the closure assembly (10).

12. Drainage safety device (100) according to one of the preceding claims,
**characterized in that**
at least one sensor is provided for the closed position (I) and/or the release position (II) of the sealing disk (11).

13. Drainage safety device (100) according to one of the preceding claims,
**characterized in that**
a drain housing (30) is provided for supporting the actuating assembly (20) on the drain (101) and/or for defining a drain opening (A) on the drain (101), which can be closed by the sealing disk (11).

14. A drain safety system (110) comprising a plurality of drain safety devices (100) according to any one of the preceding claims.

15. Drainage safety system (110) according to the preceding claim,
**characterized in that**
the plurality of drainage safety devices (100) can be actuated all together and/or simultaneously with the aid of a remote control device (111), which can be arranged at a distance from the plurality of drainage safety devices (100),
wherein, in particular, the multiple drainage safety devices (100) are connected in series, or the plurality of drainage safety devices (100) can be actuated individually and/or at any desired times with the aid of a remote control device (111) which can be arranged at a distance from the plurality of drainage safety devices (100),
and/or **in that** the remote control device (111) has at least one switching element (S1) or two switching elements (S1, S2) for all drainage safety devices (100) in order to actuate the drainage safety devices (100) together and/or simultaneously, or **in that** the remote control device (111) has at least one switching element (S1) or two switching elements (S1, S2) per drainage safety device (100) in order to actuate the drainage safety devices (100) individually and/or at any desired times.

## Revendications

1. Dispositif de sécurité d'écoulement (100) pour au moins un écoulement (101), en particulier un écoulement au sol, un écoulement de cour ou un écoulement de rue, présentant :
un ensemble de fermeture (10) pour fermer et ouvrir l'écoulement (101)
et un ensemble d'actionnement (20) pour actionner l'ensemble de fermeture (10),
dans lequel l'ensemble de fermeture (10) comprend une disque d'étanchéité (11) pour l'écoulement (101),
et dans lequel le disque d'étanchéité (11) est mobile entre deux positions (I, II) :
- une position de fermeture (I), dans laquelle l'écoulement (101) est fermée par le disque d'étanchéité (11), et
- une position de libération (II) dans laquelle l'écoulement (101) est ouverte par le disque d'étanchéité (11),
dans lequel l'ensemble d'actionnement (20) est réalisé sous la forme d'un dispositif de commande automatique et/ou automatisé pour actionner l'ensemble de fermeture (10) à distance de l'ensemble de fermeture (10) et pour transférer le disque d'étanchéité (11) entre la position de fermeture (I) et la position de libération (II),
dans lequel l'ensemble de fermeture (10) comprend un cylindre de levage (12) qui est relié au disque d'étanchéité (11) et qui est adapté pour déplacer le disque d'étanchéité (11),
dans lequel l'ensemble d'actionnement (20) comprend un piston de commande (21) qui est adapté pour fournir une surface de roulement pour le disque d'étanchéité (11) lorsqu'il se déplace entre la position de fermeture (I) et la position de libération (II),
et dans lequel l'ensemble d'actionnement (20) comprend un support de piston de commande (22) qui est adapté pour supporter le piston de commande (21),
**caractérisé en ce que**
le support de piston de commande (22) et le piston de commande (21) présentent une première ligne de commande (L1) pour transférer le disque d'étanchéité (11) de la position de libération (II) à la position de fermeture (I) et une deuxième ligne de commande (L2) pour transférer le disque d'étanchéité (11) de la position de fermeture (I) à la position de libération (II).

2. Dispositif de sécurité d'écoulement (100) selon la revendication 1,
**caractérisé en ce que**
l'ensemble d'actionnement (20) est réalisé sous la forme d'un dispositif de commande hydraulique ou pneumatique.

3. Dispositif de sécurité d'écoulement (100) selon la revendication 1 ou 2,
**caractérisé en ce que**
le cylindre de levage (12) est fixé, en particulier soudé, par liaison de matière avec le disque d'étanchéité (11),
et/ou **en ce que** le cylindre de levage (12) est réalisé en forme de godet avec un fond (12b) et une surface d'enveloppe (12m),
et/ou **en ce que** le disque d'étanchéité (11) est disposé en forme de collerette sur une ouverture (12c) du cylindre de levage (12),
et/ou **en ce que** le disque d'étanchéité (11) et/ou le cylindre de levage (12) sont/est réalisé(s) en un métal ou un alliage de métaux, en particulier en acier inoxydable,
ou **en ce que** le disque d'étanchéité (11) et/ou le cylindre de levage (12) sont/est réalisé(s) en un métal ou en un alliage métallique, en particulier en métal léger, et présentent/présentent un revêtement en acier inoxydable.

4. Dispositif de sécurité d'écoulement (100) selon l'une quelconque des revendications précédentes,
**caractérisé en ce que**
le cylindre de levage (12) présente une culasse (14), en particulier en forme de douille et/ou à gradin, pour délimiter un espace intérieur dans le cylindre de levage (12), en particulier pour le fermer de manière étanche, et/ou pour fournir une surface de guidage pour le disque d'étanchéité (11) lors du glissement sur le piston de commande (21) entre la position de fermeture (I) et la position de libération (II),
la culasse (14) étant en particulier reliée au cylindre de levage (12), par exemple fixée par complémentarité de formes et/ou par adhérence, en particulier vissée,
au moins l'un des éléments suivants étant de préférence disposé entre la culasse (14) et le piston de commande (21) et/ou coaxialement au piston de commande (21) :
- une bague de raclage (15), en particulier en un matériau d'étanchéité, par exemple en élastomère, pour étancher une chambre de commande (K1, K2) entre le piston de commande (21) et le cylindre de levage (12) vers l'extérieur et/ou pour racler des résidus d'intempéries et/ou des résidus de saleté du piston de commande (21), en particulier lors du passage du disque d'étanchéité (11) de la position de fermeture (I) à la position de libération (II),
- une bande de guidage (16), en particulier en un polymère, comprenant par exemple du fluor et/ou du carbone, pour réduire le frottement lors du glissement du disque d'étanchéité (11) sur le piston de commande (21) entre la position de fermeture (I) et la position de libération (II), et/ou
- une bague à lèvres (17), en particulier en un matériau d'étanchéité, par exemple en élastomère, pour rendre étanche une chambre de commande (K1, K2) entre le piston de commande (21) et le cylindre de levage (12) vers l'extérieur, en particulier lors du transfert du disque d'étanchéité (11) de la position de libération (II) à la position de fermeture (I),
dans lequel en particulier la bague à lèvres (17) est maintenue sur la culasse (14) à l'aide d'une rondelle de couvercle (13), la rondelle de couvercle (13) étant de préférence reliée à la culasse (14), par exemple fixée par complémentarité de formes et/ou de forces, en particulier vissée.

5. Dispositif de sécurité d'écoulement (100) selon l'une quelconque des revendications précédentes,
**caractérisé en ce que**
le piston de commande (21) est conçu pour fournir une énergie auxiliaire, en particulier hydraulique ou pneumatique, pour actionner l'ensemble de fermeture (10),
et/ou **en ce que** le support de piston de commande (22) est conçu pour fournir une énergie auxiliaire, notamment hydraulique ou pneumatique, pour actionner l'ensemble de fermeture (10),
et/ou **en ce que** le support de piston de commande (22) est relié au piston de commande (21), par exemple fixé par complémentarité de formes et/ou de forces, en particulier vissé.

6. Dispositif de sécurité d'écoulement (100) selon l'une quelconque des revendications précédentes,
**caractérisé en ce que**
le piston de commande (21) et le cylindre de levage (12) sont disposés l'un par rapport à l'autre de telle sorte qu'entre le piston de commande (21) et le cylindre de levage (12) sont formées au moins une, en particulier deux, chambres de commande (K1, K2) étanches aux fluides vers l'extérieur,
et/ou **en ce que** le piston de commande (21) et le cylindre de levage (12) sont disposés l'un par rapport à l'autre de telle sorte qu'entre le piston de commande (21) et le cylindre de levage (12) sont formées une première chambre de commande (K1) pour faire passer le disque d'étanchéité (11) de la position de libération (II) à la position de fermeture (I) et une deuxième chambre de commande (K2) pour faire passer le disque d'étanchéité (11) de la position de fermeture (I) à la position de libération (II).

7. Dispositif de sécurité d'écoulement (100) selon la revendication 6,
**caractérisé en ce que**
le piston de commande (21) présente un joint de piston (23), en particulier en caoutchouc, par exemple en caoutchouc nitrile, pour rendre étanche la première chambre de commande (K1) par rapport à la deuxième chambre de commande (K2) entre le piston de commande (21) et le cylindre de levage (12),
dans lequel, en particulier, le joint de piston (23) est maintenu sur le piston de commande (21) à l'aide d'une rondelle (24),
la rondelle (24) étant de préférence fixée, en particulier vissée, au piston de commande (21) à l'aide d'un écrou fileté (25),
et/ou **en ce que** les lignes de commande (L1, L2) s'étendent à l'intérieur à travers le support de piston de commande (22) et le piston de commande (21).

8. Dispositif de sécurité d'écoulement (100) selon l'une des revendications précédentes 6 ou 7,
**caractérisé en ce que**
la première conduite de commande (L1) est raccordée par voie fluidique à la première chambre de commande (K1) pour faire passer le disque d'étanchéité (11) de la position de libération (II) à la position de fermeture (I)
et la deuxième conduite de commande (L2) est raccordée par voie fluidique à la deuxième chambre de commande (K2) pour faire passer le disque d'étanchéité (11) de la position de fermeture (I) à la position de libération (II).

9. Dispositif de sécurité d'écoulement (100) selon l'une quelconque des revendications précédentes,
**caractérisé en ce que**
le support de piston de commande (22) présente deux soupapes de commande (V1, V2) pour actionner l'ensemble de fermeture (10),
et/ou **en ce que** le support de piston de commande (22) présente une première soupape (V1) pour commander le disque d'étanchéité (11) de la position de libération (II) à la position de fermeture (I) et une deuxième soupape (L2) pour commander le disque d'étanchéité (11) de la position de fermeture (I) à la position de libération (II),
la première soupape (V1) étant notamment raccordée à la première ligne de commande (L1) pour faire passer le disque d'étanchéité (11) de la position de libération (II) à la position de fermeture (I)
et la deuxième soupape (V2) est raccordée par voie fluidique à la deuxième conduite de commande (L2) pour faire passer le disque d'étanchéité (11) de la position de fermeture (I) à la position de libération (II).

10. Dispositif de sécurité d'écoulement (100) selon l'une quelconque des revendications précédentes,
**caractérisé en ce que**
le support de piston de commande (22) et/ou le piston de commande (21) sont/est réalisé(s) en un métal ou en un alliage métallique, en particulier en acier inoxydable,
ou **en ce que** le support de piston de commande (22) et/ou le piston de commande (21) sont/est réalisé(s) en un métal ou en un alliage métallique, en particulier en métal léger, et présentent/présentent un revêtement en acier inoxydable,
et/ou **en ce que** le support de piston de commande (22) est relié, de préférence par au moins une, en particulier deux, lignes à distance extérieures (F1, F2), à un dispositif de commande à distance (111) qui peut être disposé à distance de l'ensemble de fermeture (10).

11. Dispositif de sécurité d'écoulement (100) selon l'une quelconque des revendications précédentes,
**caractérisé en ce que**
le dispositif de commande à distance (111) est réalisé pour commander le disque d'étanchéité (11) de la position de libération (II) à la position de fermeture (I) à cet effet, un fluide sous pression à travers la première soupape (V1) sur le support de piston de commande (22) et à ouvrir la deuxième soupape (V2) sur le support de piston de commande (22), tandis que le disque d'étanchéité (11) se déplace de la position de libération (II) à la position de fermeture (I),
et de fermer la première soupape (V1) sur le support de piston de commande (22) et de maintenir ouverte la deuxième soupape (V2) sur le support de piston de commande (22), après que le disque d'étanchéité (11) a atteint la position de fermeture (I),
et/ou **en ce que** le dispositif de commande à distance (111) est réalisé pour commander le disque d'étanchéité (11) de la position de fermeture (I) à la position de libération (II) à cet effet,
un fluide sous pression à travers la deuxième soupape (V2) sur le support de piston de commande (22) et à ouvrir la première soupape (V1) sur le support de piston de commande (22), tandis que le disque d'étanchéité (11) se déplace de la position de fermeture (I) à la position de libération (II),
et de fermer la deuxième soupape (V2) sur le support de piston de commande (22) et de maintenir ouverte la première soupape (V1) sur le support de piston de commande (22), après que le disque d'étanchéité (11) a atteint la position de libération (II),
et/ou **en ce que** le dispositif de commande à distance (111) présente au moins un élément de commutation (S1), en particulier un levier de commutation, ou deux éléments de commutation (S1, S2), en particulier deux boutons de commutation, pour actionner l'ensemble de fermeture (10).

12. Dispositif de sécurité d'écoulement (100) selon l'une quelconque des revendications précédentes,
**caractérisé en ce qu'**
il est prévu au moins un capteur pour la position de fermeture (I) et/ou la position de libération (II) du disque d'étanchéité (11).

13. Dispositif de sécurité d'écoulement (100) selon l'une quelconque des revendications précédentes,
**caractérisé en ce qu'**
un boîtier d'écoulement (30) est prévu pour soutenir l'ensemble d'actionnement (20) sur l'écoulement (101) et/ou pour déterminer une ouverture d'écoulement (A) sur l'écoulement (101), qui peut être fermée par le disque d'étanchéité (11).

14. Système d'évacuation (110) comprenant une pluralité de dispositifs d'évacuation (100) selon l'une quelconque des revendications précédentes.

15. Système de sécurité d'écoulement (110) selon la revendication précédente,
**caractérisé en ce que**
la pluralité de dispositifs de sécurité d'écoulement (100) peuvent être actionnés tous ensemble et/ou simultanément à l'aide d'un dispositif de commande à distance (111) qui peut être disposé à distance de la pluralité de dispositifs de sécurité d'écoulement (100),
dans lequel, en particulier, la pluralité de dispositifs de sécurité d'écoulement (100) sont connectés en série,
ou la pluralité de dispositifs de sécurité d'écoulement (100) peuvent être actionnés individuellement et/ou à des moments arbitraires au moyen d'un dispositif de commande à distance (111) qui peut être placé à distance de la pluralité de dispositifs de sécurité d'écoulement (100),
et/ou **en ce que** le dispositif de commande à distance (111) présente au moins un élément de commutation (S1) ou deux éléments de commutation (S1, S2) pour tous les dispositifs de sécurité d'écoulement (100), afin d'actionner les dispositifs de sécurité d'écoulement (100) ensemble et/ou simultanément, ou **en ce que** le dispositif de commande à distance (111) présente au moins un élément de commutation (S1) ou deux éléments de commutation (S1, S2) par dispositif de sécurité d'écoulement (100), afin d'actionner les dispositifs de sécurité d'écoulement (100) individuellement et/ou à des moments quelconques.
